# EUROPEAN PATENT APPLICATION

(11) **EP 4 550 451 A1**
(43) Date of publication of application: **07.05.2025**
(21) Application number: 24189640.6
(22) Date of filing: 19.07.2024
(51) Int. Cl.: H01M 4/134, H01M 4/36, H01M 4/38, H01M 10/052, H01M 10/0565, H01M 10/0567

(54) **LITHIUM METAL BATTERY AND METHOD OF MANUFACTURING THE SAME**

(30) Priority: 31.10.2023 KR 20230148430; 15.04.2024 KR 20240049843
(71) Applicant: SAMSUNG SDI CO., LTD., Giheung-gu Yongin-si, Gyeonggi-do 17084 (KR)
(72) Inventor: Bae, Woojin, 17084 Gyeonggi-do (KR); Lee, Kanghee, 17084 Gyeonggi-do (KR); Moon, Jongseok, 17084 Gyeonggi-do (KR); Kim, Heemin, 17084 Gyeonggi-do (KR); Park, Jongseok, 17084 Gyeonggi-do (KR); Woo, Hyunsik, 17084 Gyeonggi-do (KR); Shin, Juhun, 17084 Gyeonggi-do (KR); Hong, Donggi, 17084 Gyeonggi-do (KR); Pyo, Sujin, 17084 Gyeonggi-do (KR)
(74) Representative: Michalski Hüttermann & Partner Patentanwälte mbB

(57) **Abstract**

A lithium metal battery may include an anode current collector, a protective film on the anode current collector, a separator, a gel polymer electrolyte, and a cathode, the protective film includes boron nitride (BN) and a binder, and the gel polymer electrolytes contains a gel polymer, BN, a nitrile-based compound, and a liquid electrolyte.

## Description

### CROSS-REFERENCE TO RELATED APPLICATION

The present application claims priority to and the benefit of Korean Patent Application Nos. 10-2023-0148430, filed on October 31, 2023, and 10-2024-0049843 filed on April 15, 2024, in the Korean Intellectual Property Office, the entire content of which is incorporated herein by reference.

### BACKGROUND

### 1. Field

Embodiments of the present disclosure described herein are related to a lithium metal battery and a method of manufacturing the same.

### 2. Description of the Related Art

Currently commercially available lithium metal batteries may utilize carbon-based anode active materials such as graphite. A volume of carbon-based anode active materials is not changed during charging or discharging, and thus the stability of lithium metal batteries is relatively high. However, carbon-based anode active materials have relatively low capacity, and thus anode active materials with higher capacity may be desirable.

Lithium metals may be used as anode active materials, which should have a much higher theoretical electric capacity than comparable carbon-based anode active materials.

Due to a side reaction between a lithium metal and an electrolyte during charging/discharging, dendrites may be formed on a surface of a lithium metal and grown to cause a short circuit between a cathode and an anode, which may deteriorate the lifespan characteristics of lithium metal batteries including the lithium metal.

A method utilizing a solid electrolyte with a high modulus and a high lithium ion transference number may be considered to control lithium dendrites.

However, among solid electrolytes, solid polymer electrolytes have relatively low ionic conductivity at room temperature, and solid ceramic electrolytes have limitations in that preparing and handling processes are difficult, and thus the solid polymer electrolytes and the solid ceramic electrolytes are difficult to put into practical use.

In comparison, gel polymer electrolytes are relatively easy to prepare and have excellent or suitable ionic conductivity and excellent or suitable electrochemical performance, but mechanical strength and ionic conductivity thereof should be further improved.

### SUMMARY

Aspects according to one or more embodiments are directed toward a lithium metal battery having improved ionic conductivity and mechanical properties.

Aspects according to one or more embodiments are directed toward a method of manufacturing the lithium metal battery.

Additional aspects will be set forth in part in the description which follows and, in part, will be apparent from the description, or may be learned by practice of the presented embodiments of the present disclosure.

According to one or more embodiments, a lithium metal battery may include an anode current collector, a protective film formed (or provided) on the anode current collector, a separator, a gel polymer electrolyte, and a cathode, wherein the protective film includes boron nitride (BN) and a binder, and the gel polymer electrolytes contains a gel polymer, boron nitride (BN), a nitrile-based compound, and a liquid electrolyte.

According to one or more embodiments, a method of manufacturing a lithium metal battery may include preparing (e.g., forming or applying) an anode current collector, forming or preparing (e.g., applying) a protective film including boron nitride (BN) and a binder on the anode current collector, preparing a separator, preparing a cathode, stacking the anode current collector, the separator, and the cathode to prepare a battery assembly, injecting a gel polymer electrolyte-forming composition including a gel polymer-forming crosslinkable monomer, a liquid electrolyte, boron nitride (BN), and a nitrile-based compound into the battery assembly, and performing heat treatment to form (or provide) a gel polymer electrolyte, thereby manufacturing the lithium metal battery.

The forming (or providing) of the protective film including the boron nitride (BN) and the binder on the anode current collector may include coating the anode current collector with a protective film-forming composition including boron nitride (BN) and at least one of (e.g., selected from among) a binder precursor and/or a binder and performing heat treatment, and the protective film may further include lithium salt.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a cross-sectional view for describing a stacked structure of a lithium metal battery according to some embodiments;
FIG. 2 is a cross-sectional view for describing a stacked structure of a lithium metal battery according to some embodiments;
FIG. 3 is a cross-sectional view for describing a stacked structure of a lithium metal battery according to some embodiments;
FIG. 4 is a schematic view of a lithium metal battery according to some embodiments;
FIG. 5 is a schematic view of a lithium metal battery according to some embodiments; and
FIG. 6 is a schematic view of a lithium metal battery according to some embodiments.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. In some embodiments, the embodiments are merely described herein, by referring to the drawings, to explain aspects of the present description. As utilized herein, the term "and/or" includes any and all combinations of one or more of the associated listed items. As utilized herein, expressions such as "at least one of", "one of", and "of (e.g., selected from among)", when preceding a list of elements, modify the entire list of elements and do not modify the individual elements of the list. For example, "at least one of a, b or c", "at least one selected from among a, b and c", and/or the like, may indicate only a, only b, only c, both (e.g., simultaneously) a and b, both (e.g., simultaneously) a and c, both (e.g., simultaneously) b and c, all of a, b, and c, or variations thereof.

Hereinafter, as the present disclosure allows for one or more suitable changes and numerous embodiments, specific embodiments will be illustrated in the drawings and described in more detail in the written description. However, this is not intended to limit the present disclosure to particular modes of practice, and it is to be appreciated that all changes, equivalents, and substitutes that do not depart from the spirit and technical scope are encompassed in the present disclosure.

The terms utilized herein are merely utilized to describe specific embodiments and are not intended to limit the present disclosure. An expression utilized in the singular encompasses the expression of the plural, unless it has a clearly different meaning in the context. As utilized herein, it is to be understood that the terms such as "including," "having," and "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added. The symbol "/" utilized herein may be interpreted as "and" or "or" according to the context.

In the drawings, the thicknesses of layers and regions are exaggerated or reduced for clarity. Like reference numerals in the drawings denote like elements throughout, and duplicative descriptions thereof may not be provided the specification. Throughout the specification, it will be understood that when a component, such as a layer, a film, a region, or a plate, is referred to as being "on" another component, the component may be directly on the other component or intervening components may be present thereon. Throughout the specification, while such terms as "first," "second," and/or the like may be utilized to describe one or more suitable components, such components should not be limited to the above terms. The above terms are utilized only to distinguish one component from another. Components having substantially the same functional configuration in the present specification and drawings are denoted by the same reference numerals, and redundant descriptions thereof will not be provided.

Unless otherwise specified herein, it will be understood that when a component, such as a layer, a film, a region, or a plate, is referred to as being "on" another component, the component may be directly on the other component or intervening components may be present thereon.

Unless otherwise specified herein, singular forms may include plural forms. In one or more embodiments, unless otherwise specified, "including A or B" may refer to three cases, namely, the case including A, the case including B, and the case including A and B.

As utilized herein, "combination thereof' may refer to a mixture, a stacked structure, a composite, a copolymer, an alloy, a blend, or a reaction product of components.

As utilized herein, the term "size" of particles refers to an average diameter when particles are spherical and refers to an average major axis length when particles are non-spherical. A particle diameter of particles may be measured by utilizing a particle size analyzer (PSA).

Unless otherwise defined herein, a particle diameter may be an average particle diameter. For example, a particle diameter refers to an average particle diameter (D50) which refers to a diameter of particles with a cumulative volume of 50 vol% in a particle size distribution. The average particle diameter (D50) may be measured through methods suitable to those skilled in the art, for example, by utilizing a particle size analyzer, a transmission electron microscope image, or a scanning electron microscope image. Through other methods, measurement may be performed by utilizing a measuring device utilizing dynamic light-scattering, data analysis is performed to count the number of particles for each particle size range, and then a value of the average particle diameter (D50) may be easily obtained therefrom through calculation. In some embodiments, the average particle diameter (D50) may be measured by utilizing a laser diffraction method. During measurement through laser diffraction, more specifically, particles to be measured may be dispersed in a dispersion medium to then be introduced into a commercially available laser diffraction particle diameter measuring device (for example, Microtrac MT 3000), about 28 kHz ultrasonic waves may be irradiated thereon at an output power of about 60 W, and then the average particle size (D50) based on about 50 % of a particle diameter distribution may calculated in the measuring device.

As utilized herein, the term "metal" includes all of metals and metalloids such as silicon and germanium in an elemental or ionic state, and "the term "alloy"" refers to a mixture of two or more metals.

As utilized herein, the term "cathode active material" refers to a cathode material that may undergo lithiation and delithiation, and the term "anode active material" refers to an anode material that may undergo lithiation and delithiation.

As utilized herein, the terms "lithiate" and "lithiating" refer to a process of adding lithium to a cathode active material or an anode active material, and the terms "delithiate" and "delithiating" refer to a process of removing lithium from the cathode active material or the anode active material.

The terms "charge" and "charging" as utilized herein refer to a process of providing electrochemical energy to a battery, and the terms "discharge" and "discharging" as utilized herein refer to a process of removing electrochemical energy from the battery.

The terms "positive electrode" and "cathode" as utilized herein refer to an electrode at which electrochemical reduction and lithiation occur during a discharging process, and the terms "negative electrode" and "anode" as utilized herein refer to an electrode at which electrochemical oxidation and delithiation occur during a discharging process.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

The term "length" and "thickness" as utilized herein refers to, for example, an average length, an average thickness, and an average width respectively. The "length" and "thickness" measured utilizing software from a scanning electron microscope image.

As used herein, the aspect ratio represents the ratio (L1/L2) of the major axis length L1 (eg, length) and the minor axis length L2 (eg, diameter). Here, the aspect ratio, major axis length, minor axis length, length, and diameter represent the average aspect ratio, average major axis length, average minor axis length, average length, and average diameter. The aspect ratio can be evaluated using a scanning electron microscope.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Hereinafter, a lithium metal battery and a method of manufacturing the same according to some embodiments will be described in more detail.

An anode-free lithium metal battery may be a battery that uses only an anode current collector without an anode active material layer. Through a process in which, during charging, lithium ions transferred from a cathode are precipitated on a surface of the anode current collector, and during discharging, the lithium precipitated on the anode current collector is eluted again and inserted into the cathode, an operation of the battery is realized or driven.

The anode-free lithium metal battery has an advantage of maximizing or increasing the energy density per volume/weight of the battery because a lithium metal utilized as an anode active material is not provided or needed. However, lithium metal precipitated during a driving process may cause lithium dendrites to grow due to substantially un-uniform (e.g., non-uniform) current concentrations during an oxidation/reduction process, and the lithium dendrites may cause loss of a lithium anode, may reduce the capacity and lifespan characteristics of the anode-free lithium metal battery, and may cause a short circuit between a cathode and an anode, which may cause a safety problem.

In order to solve the above limitations, a method has been proposed in which a protective film is introduced on an anode current collector through a method of minimizing or reducing contact between lithium and an electrolyte to reduce side reactions, thereby minimizing or reducing exposure to an electrolyte at an electrode surface and forming (or providing) a substantially uniform flow of lithium ions throughout an electrode to suppress or reduce the growth of lithium dendrites.

A lithium metal battery according to some embodiments may include an anode current collector, a protective film formed (or provided) on the anode current collector, a separator, a gel polymer electrolyte, and a cathode, wherein the protective film includes boron nitride (BN) and a binder, and the gel polymer electrolyte contains a gel polymer, boron nitride (BN), a nitrile-based compound, and a liquid electrolyte.

The lithium metal battery comprises an anode active material layer between the anode current collector and the protective film or is free of the anode active material layer.

According to some embodiments, the protective film and the gel polymer electrolyte of the lithium metal battery may contain boron nitride (BN).

Boron nitride (BN) may have Lewis acid properties and may interact with a polymer. Boron nitride (BN) may be contained as an additive in the protective film and the gel polymer electrolyte to increase the strength of the protective film, the gel polymer electrolyte, and the separator containing the same and increase ionic conductivity. In some embodiments, the lithium metal battery including the protective film, the gel polymer electrolyte, and the separator may have reduced resistance to have improved lifespan characteristics.

A size of boron nitride (BN) (e.g., in a form of particles or fibers) may be, for example, in a range of about 0.01 micrometer (µm) (about 10 nanometers (nm)) to about 10 µm, about 0.1 µm (about 100 nm) to about 5 µm, about 0.1 µm (about 100 nm) to about 3 µm, about 0.1 µm (about 100 nm) to about 2 µm, or about 0.1 µm (about 100 nm) to about 1 µm. According to some embodiments, the content (e.g., amount) of boron nitride (BN) of the gel polymer electrolyte may be controlled or selected to be less than or equal to the content (e.g., amount) of boron nitride (BN) of the protective film. If (e.g., when) the content (e.g., amount) of boron nitride (BN) is in such a range, the protective film may have physical properties effective in suppressing dendrites during lithium electrodeposition, and the ionic conductivity of the gel polymer electrolyte may increase so that a lithium metal battery having increased lifespan characteristics may be manufactured.

The content (e.g., amount) of boron nitride (BN) in the protective film may be about 5 parts by weight or less or in a range of about 0.01 parts by weight to about 5 parts by weight, about 0.05 parts by weight to about 5 parts by weight, about 0.1 parts by weight to about 5 parts by weight, about 0.2 parts by weight to about 5 parts by weight, or about 0.5 parts by weight to about 3 parts by weight with respect to about 100 parts by weight of the total weight of the protective film. If (e.g., when) the content (e.g., amount) of boron nitride (BN) in the protective film is in such a range, mechanical properties may be improved without a decrease in ionic conductivity.

The content (e.g., amount) of boron nitride (BN) in the gel polymer electrolyte may be about 5 parts by weight or less or in a range of about 0.01 parts by weight to about 5 parts by weight, about 0.05 parts by weight to about 5 parts by weight, about 0.05 parts by weight to about 3 parts by weight, or about 0.1 parts by weight to about 3 parts by weight, based on about 100 parts by weight of the gel polymer electrolyte. If (e.g., when) the content (e.g., amount) of boron nitride (BN) in the gel polymer electrolyte is in such a range, a gel polymer electrolyte having improved mechanical properties may be obtained without a decrease in ionic conductivity.

In the lithium metal battery according to some embodiments, a thickness of the protective film may be in a range of about 1 µm to about 10 µm, and a thickness of the separator may be in range of about 5 µm to about 20 µm. If (e.g., when) the thickness of each of the protective film and separator is in a such a range, a lithium metal battery having improved ionic conductivity and physical properties and improved lifespan characteristics may be provided.

The gel polymer electrolyte may contain the gel polymer, boron nitride (BN), the nitrile-based compound, and the liquid electrolyte.

The nitrile-based compound may be a compound having a melting point of about 30 °C or more and may be a solid or solid-like material in a solid state at room temperature. Such a nitrile-based compound may have excellent or suitable stability and excellent or suitable ionic conductivity.

The nitrile-based compound may include, for example, at least one of (e.g., selected from among) succinonitrile (SN), adiponitrile, pimelonitrile, suberonitrile, sebaconitrile, butyronitrile, acetonitrile, and/or propion nitrile. A content (e.g., amount) of the nitrile-based compound may be in a range of about 0.01 parts by weight to about 5 parts by weight, about 0.05 parts by weight to about 3 parts by weight, or about 0.1 parts by weight to about 3 parts by weight with respect to about 100 parts by weight of the total weight of the gel polymer electrolyte.

Some examples of the nitrile-based compound may include SN.

The liquid electrolyte may contain a lithium salt and a non-aqueous organic solvent. The non-aqueous organic solvent may serve as a medium through which ions involved in an electrochemical reaction of a battery may move. The non-aqueous organic solvent may be a carbonate-based solvent, an ester-based solvent, ether-based, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), fluoroethylene carbonate (FEC), difluoroethylene carbonate (2FEC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, fluorinated ethyl acetate, fluorinated propyl acetate, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In some embodiments, the ketone-based solvent may include cyclohexanone and/or the like. The alcohol-based solvent may include ethyl alcohol, isopropyl alcohol, and/or the like. The aprotic solvent may include nitriles such as R-CN wherein R is a C2-C20 linear, branched, or ring structure hydrocarbon group and includes a double bond, an aromatic ring, or an ether group, a ring having a double bond or an ether bond; amides such as dimethylformamide; dioxolanes such as 1,3-dioxolane and 1,4-dioxolane; or sulfolanes.

The non-aqueous organic solvent may be utilized alone or in combination of two or more types (kinds).

In some embodiments, if (e.g., when) the carbonate-based solvent is utilized, cyclic carbonate and chain carbonate may be mixed and utilized, and the cyclic carbonate and the chain carbonate may be mixed at a volume ratio of about 1:1 to about 1:9.

The lithium salt may be a material that dissolves in an organic solvent, serves as a source of lithium ions in a battery, enables the basic operation of a lithium secondary battery, and serves to promote the movement of lithium ions between a cathode and an anode. Representative examples of the lithium salt may include at least one of (e.g., selected from among) LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, lithium bis(fluorosulfonyl)imide (Li(FSO₂)₂N) (LiFSI), LiC₄F₉SO₃, LiN(CₓF₂ₓ₊₁SO₂)(C_{y}F_{2y+1}SO₂), wherein x and y are each an integer from 1 to 20, lithium trifluoromethane sulfonate, lithium etrafluoroethanesulfonate, lithium difluorobis(oxalato)phosphate (LiDFOB), and/or lithium bis(oxalato)borate (LiBOB). A concentration of the lithium salt may be, for example, in a range of about 0.1 M to about 5.0 M.

The gel polymer electrolyte may be present in the separator and may be present at an interface between the separator and the cathode. The gel polymer electrolyte may be contained in a portion of the cathode.

The gel polymer may be i) a crosslinked product of a polyfunctional acrylic monomer having three or more polymerizable functional groups, or ii) a crosslinked product of a polyfunctional acrylic monomer having three or more polymerizable functional groups as a first polymerizable monomer, and at least one second polymerizable monomer of (e.g., selected from among) a urethane acrylic monomer having two or more polymerizable functional groups, and/or a polymerizable monomer containing a perfluoropolyether (PFPE) unit and having two or more polymerizable functional groups.

The polyfunctional acrylic monomer having three or more polymerizable functional groups may have, for example, three or more polymerizable functional groups, for example, 3 to 6 polymerizable functional groups. If (e.g., when) the polyfunctional acrylic monomer as a first polymerizable monomer has three or more polymerizable functional groups, a gel polymer electrolyte having excellent or suitable physical properties may be obtained. Such a polymerizable monomer may include, for example, pentaerythritol tetraacrylate, pentaerythritol tetramethacrylate, trimethylolpropane triacrylate, trimethylolpropane trimethacrylate (TMPTMA), ropoxylated(3)trimethylolpropane triacrylate (PO(3)TMPTA), propoxylated(6)trimethylolpropane triacrylate (PO(6)TMPTA), ethoxylated trimethylolpropane triacrylate, di(trimethylolpropane)tetraacrylate), pentaerythritol triacrylate (PETA), propoxylated glyceryl triacrylate, tris(2-hydroxyethyl) isocyanurate triacrylate (THEICTA), dipentaerythritol pentaacrylat (DPEPA), or a combination thereof.

The urethane acrylic monomer having two or more functional groups may be a compound represented by Formula 1 , a compound represented by Formula 2 , or a combination thereof.

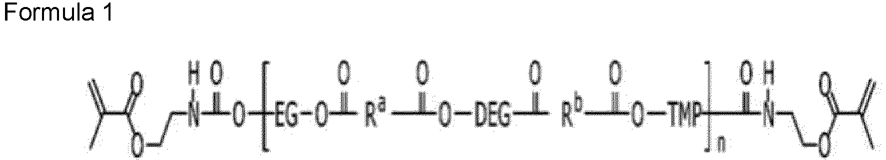

In Formula 1, R^{a} and R^{b} may be identical to or different from each other and are each a substituted or unsubstituted C1-C10 alkylene group, EG may be an ethylene glycol residue, DEG may be a diethylene glycol residue, TMP may be a trimethylolpropane residue, and n may be an integer from 1 to 100.

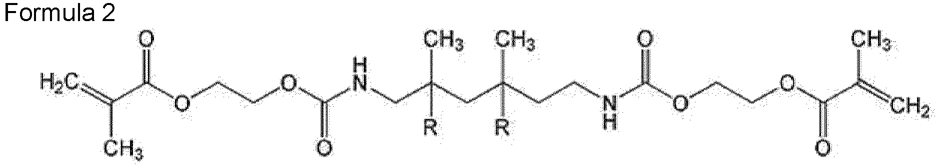

In Formula 2, R may each independently be a hydrogen atom or a C1-C3 alkyl group.

In Formula 1, n may be an integer from 3 to 80, an integer from 5 to 50, or an integer from 5 to 30. For example, the substituted alkylene may be alkylene, at least one hydrogen of which is substituted with a C1-C3 alkyl group.

The compound of Formula 1 or the compound of Formula 2 may be a polyfunctional acrylic monomer containing a urethane group.
Examples of the compound represented by Formula 1 include compounds represented by Formula 1-1 .

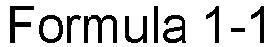

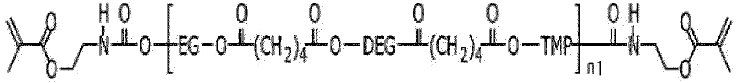

In Formula 1-1, n1 may be an integer from 1 to 100, EG may be an ethylene glycol residue, and DEG may be a diethylene glycol residue, and a trimethylolpropane residue.
In Formula 1-1, n1 may be an integer from 3 to 80, an integer from 5 to 50, or an integer from 5 to 30.

The compounds of Formula 1 and Formula 1-1 may be prepared by utilizing the preparing method disclosed in Korean Registered Patent No. 10-1326629, and Korean Registered Patent No. 10-1326629, the entire content of each of the two patents is incorporated and cited herein by reference.

The above-described compound of Formula 1 may have an isocyanate group at one end and a method of manufacturing the compound will be described.

A C1-C10 aliphatic dicarboxylic acid, diethylene glycol, ethylene glycol, and trimethylol propane may be mixed, a reaction catalyst may be added thereto, and the mixture may be heat-treated to prepare polyester polyol. In some embodiments, polyester polyol may be obtained by esterification reaction between a C1-C10 aliphatic dicarboxylic acid and alcohols, i.e., diethylene glycol, ethylene glycol, and trimethylol propane. For example, titanium isopropoxide may be used as the reaction catalyst.

As reaction between polyester polyol and isocyanatoethyl methacrylate progresses by adding the isocyanatoethyl methacrylate to the polyester polyol, polyurethane may be formed to prepare the compound of Formula 1 having isocyanate groups at both ends.

The C1 -C10 aliphatic dicarboxylic acid may be diadipic acid, succinic acid, sebacic acid, or a combination thereof.

In the reaction between polyester polyol and isocyanatoethyl methacrylate, at least one part of a hydroxyl group of the polyester polyol may react with the isocyanatoethyl methacrylate to form polyurethane. In the reaction between polyester polyol and isocyanatoethyl methacrylate, monomethyl ether hydroquinone as a polymerization inhibitor, butylated hydroxy toluene as an antioxidant, and dibutyl-tin-dilaulate as a catalyst may be added.

A weight ratio of the compound represented by Formula 1 or 1-1 may be in a range of about 10,000 to about 100,000. To have a weight average molecular weight within the range, the range of n and n1 may be used in Formulae 1 and 3, respectively. As used herein, a weight average molecular weight may be measured by a gel permeation chromatography (GPC).

If the urethane group-containing multifunctional acrylic monomer having high mechanical strength and elasticity by including an urethane moiety constitutes a copolymer structure with a multifunctional block copolymer, a gel polymer electrolyte having high mechanical strength and elasticity may be manufactured.

The urethane acrylic monomer having two or more functional groups may include a urethane moiety that has high mechanical strength and elasticity so that if (e.g., when) the urethane acrylic monomer is utilized as a second polymerizable monomer to form (or provide) a crosslinked product together with the first polymerizable monomer, a gel polymer electrolyte that maintains high mechanical strength and has elasticity may be prepared.

As the second polymerizable monomer, other monomers containing a polyfunctional functional group having a structure similar to the polyfunctional acrylic monomer containing a urethane group may be added. The other monomers each including a polyfunctional functional group may include, for example, at least one of (e.g., selected from among) urethane acrylate methacrylate, urethane epoxy methacrylate, and/or Satomer N3DE180 and/or N3DF230 (products names of Arkema Corporation).

If (e.g., when) the polyfunctional acrylic monomer containing the urethane group is utilized as a polymerizable monomer, the polyfunctional acrylic monomer may serve as a diluent in an electrolyte, which may reduce the viscosity of a gel polymer electrolyte-forming composition. The viscosity of the gel polymer electrolyte-forming composition may be in a range of about 4 cps to about 10 cps. In some embodiments, utilizing the composition having such viscosity may make it easier to inject an electrolyte into a battery structure.

The polyfunctional acrylic monomer having three or more polymerizable functional groups and the polyfunctional acrylic monomer containing the urethane group may have strong lithium cation (Li+) interaction and strong anion interaction so that lithium cations may transferred through a polymer chain and anions may be trapped to considerably increase a lithium cation (Li+) transference number. For example, a lithium cation and a lithium anion may be, for example, a cation and an anion of a lithium salt, and if (e.g., when) LiPF₆ is utilized as the lithium salt, the anion may be, for example, PF₆⁻.

The polymerizable monomer including the PFPE unit and having two or more polymerizable functional groups may contain a perfluoroether unit to have excellent or suitable ionic conductivity and may include, for example, a compound represented by Formula 3 or Formula 3-1.

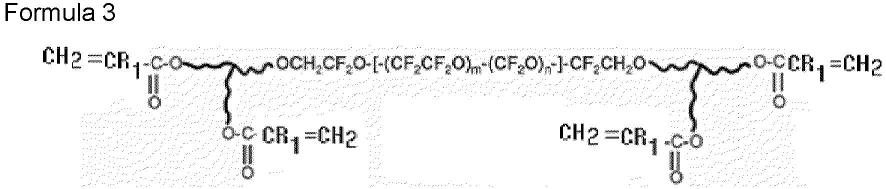

In Formula 3, R₁ may be hydrogen or a C1-C6 alkyl group, m and n may each be greater than 0, and the sum of m and n may be in a range of 2 to 300 or 1 to 100. For example, m may be a number from 1 to 150 or 1 to 100, and n may be a number from 1 to 150 or 1 to 100.

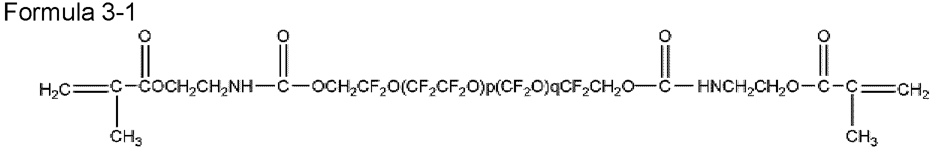

In Formula 3-1, p and q may each be greater than 0, the sum of p and q may be in a range of 2 to 300 or 1 to 100, p may be a number from 1 to 150 or a number from 1 to 100, and q may be a number from 1 to 150 or 1 to 100.

A weight average molecular weight of the compound represented by Formula 3 or Formula 3-1 may be, for example, in a range of about 400 to about 10,000, about 400 to about 5,000, or about 500 to about 3,000.

In the polymerizable monomer containing the PFPE unit and having two or more polymerizable functional groups, the number of polymerizable functional groups may be three or more or four or more.

The compound of Formula 3 may have four (meth)acrylic groups as crosslinkable functional groups, and thus while a small amount of the compound of Formula 3 is utilized, a network that may trap a large amount of liquid may be formed as compared with a case in which a compound with a small number of crosslinkable functional groups (for example, less than 3 crosslinkable functional groups) is utilized.

The second polymerizable monomer may be, for example, a compound represented by Formula 4, a compound represented by Formula 5, or a combination thereof.

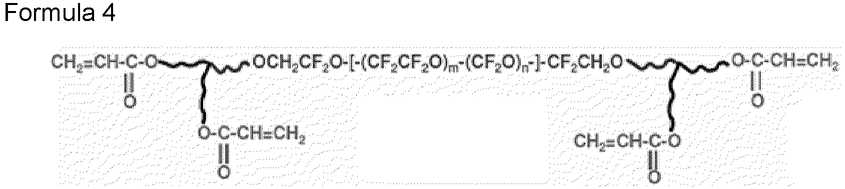

In Formula 4, m and n may each be greater than 0, and the sum of m and n may be in a range of 2 to 300 or 1 to 100. For example, m may be a number from 1 to 150 or 1 to 100, and n may be a number from 1 to 150 or 1 to 100.

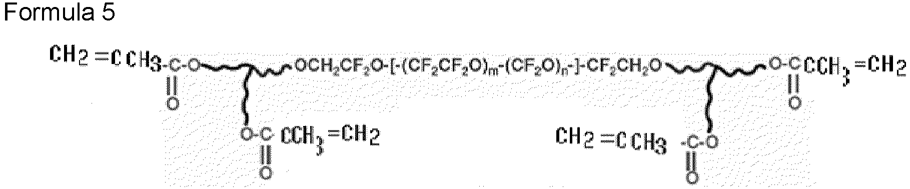

In Formula 5, m and n may each be greater than 0, and the sum of m and n may be in a range of 2 to 300. The sum of m and n may be, for example, in a range of 1 to 100. For example, m may be a number from 1 to 150 or 1 to 100, and n may be a number from 1 to 150 or 1 to 100.

The polymerizable monomer containing the PFPE unit and having three or more polymerizable functional groups may be PFPE urethane acrylate (a product name of Fluorolink^{®} AD 1700 PFPE that is commercially available from SOLVAY SPECIALTY POLYMERS ITALY S.P.A.).

A mixing weight ratio of the polyfunctional acrylic monomer, which is the first polymerizable monomer, to at least one second polymerizable monomer of (e.g., selected from among) the urethane acrylic monomer having two or more functional groups and/or the polymerizable monomer containing the PFPE unit and having three or more polymerizable functional groups may be in a range of about 1:10 to about 10:1. A weight ratio of the first polymerizable monomer to the second polymerizable monomer may be, for example, in a range of about 5:1 to about 1:1 or about 3:1 to about 1:1. If (e.g., when) the weight ratio of the first polymerizable monomer to the second polymerizable monomer is in such a range, a gel polymer electrolyte having improved ionic conductivity and physical properties may be formed.

A size of boron nitride (BN) (e.g., in a form of particles or fibers) contained in the protective film and the gel polymer electrolyte may be, for example, in a range of about 0.01 µm to about 10 µm, about 0.02 µm to about 10 µm, about 0.02 µm (about 20 nm) to about 0.1 µm (about 100 nm), or about 40 nm to about 80 nm. If (e.g., when) the size of BN is in such a range, ionic conductivity characteristics may be excellent or suitable.

In the gel polymer electrolyte, the content (e.g., amount) of BN may be about 5 parts by weight or less or in a range of about 0.1 parts by weight to about 5 parts by weight, about 0.1 parts by weight to about 3 parts by weight, or about 0.1 parts by weight to 1 part by weight with respect to 100 parts by weight of the total weight of the gel polymer electrolyte. If (e.g., when) the content (e.g., amount) of BN in the gel polymer electrolyte is in such a range, a gel polymer electrolyte having excellent or suitable ion conductivity may be prepared.

The gel polymer electrolyte may include the liquid electrolyte at a content (e.g., amount) of about 90 parts by weight to about 97 parts by weight, about 90 parts by weight to about 96 parts by weight, about 90 parts by weight to about 95 parts by weight, or about 92 parts by weight to about 94 parts by weight, the gel polymer (crosslinked polymer) at a content (e.g., amount) of about 1 part by weight to about 9 parts by weight, about 1 part by weight to about 8 parts by weight, or about 2 parts by weight to about 8 parts by weight, and BN at a content (e.g., amount) of about 5 parts by weight or less or in a range of about 0.01 parts by weight to about 5 parts by weight, about 0.05 parts by weight to about 5 parts by weight, or about 0.1 parts by weight to about 3 parts by weight, and the nitrile-based compound at a content (e.g., amount) of about 0.01 parts by weight to about 5 parts by weight, about 0.05 parts by weight to about 5 parts by weight part, or about 0.1 parts by weight to about 3 parts by weight.

The gel polymer electrolyte may include the liquid electrolyte at a content (e.g., amount) of about 90 parts by weight to about 95 parts by weight, about 91 parts by weight to about 94 parts by weight, or about 92 parts by weight to about 93 parts by weight and the crosslinked polymer at a content (e.g., amount) of about 1 part by weight to about 8 parts by weight, about 2 parts by weight to about 7 parts by weight, about 2 parts by weight to about 6 parts by weight, or about 3 parts by weight to about 5 parts by weight. If (e.g., when) the contents of the liquid electrolyte and the crosslinked polymer in the gel polymer electrolyte are in such ranges, ion conductivity may be improved.

A gel polymer electrolyte consisting of a crosslinked product obtained from the first polymerizable monomer and the second polymerizable monomer may have a very strong interaction with cations such as Li⁺ and anions such as PF₆⁻. This strong interaction may be confirmed to be caused by a difference in electron density distribution in a density functional theory (DFT) simulation.

BN may have a hexagonal crystal structure, a cubic crystal structure, and a wurtzite crystal structure according to pressure and temperature. In the present disclosure, utilizing BN having a hexagonal crystal structure may be excellent or suitable in chemical stability and mechanical properties.

In the present disclosure, the purity of BN may be about 98 % or more, and BN may be hexagonal BN in which, in an X-ray diffraction spectrum, a (002) plane peak (c-axis lattice constant) is in a range of about 3.33 Å to about 3.36 Å, and an intensity ratio of a (102) plane peak to the (002) plane peak is about 100:3 or more.

BN may be in a form of particles having a size of about 0.01 µm to about 10 µm. Here, BN or the particles of the BN may include a microcrystal in nanometer order (e.g., in a form of nano-size crystal particles) or may have a fibrous form (e.g., in a form of fibers)). A particle diameter of the microcrystal in nanometer order may be in a range of about 20 nm to about 200 nm (nanometers) or about 50 nm to about 200 nm, and an average size thereof may be in a range of about 5 nm to about 50 nm. BN having the fibrous form may have a length of about 30 µm or more to about 5 mm or less, a cross-sectional diameter size of 0.01 µm to about 10 µm, and an aspect ratio of about 10 to about 50.

The separator containing the gel polymer electrolyte may be separately prepared in the form of a self-standing film and may be positioned on the anode current collector and the protective film, and the cathode may be arranged thereon to manufacture the lithium metal battery.

In some embodiments, the anode current collector and the protective film may be positioned, and the separator and the cathode may be arranged thereon to form (or provide) a battery structure, and a gel polymer electrolyte-forming composition may be injected into the battery structure and heat-treated to manufacture the lithium metal battery including the separator containing the gel polymer electrolyte.

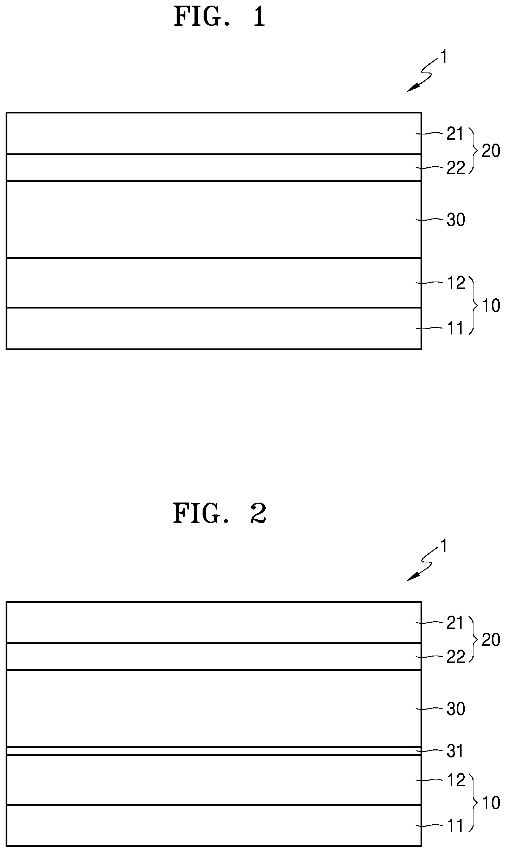

FIG. 1 is a view illustrating a stacked structure of a lithium metal battery 1 according to some embodiments.

The lithium metal battery 1 may include an anode 20 including an anode current collector 21 and may be free of an anode active material layer.

A protective film 22 may be formed between the anode current collector 21 and a separator 30.

Components of a cathode 10 may be sequentially arranged on the separator 30. The cathode 10 may include a cathode active material layer 12 and a cathode current collector 11. The separator 30 may contain a gel polymer electrolyte.

As shown in FIG. 2, a gel polymer electrolyte 31 may be arranged between the separator 30 and the cathode 10. In some embodiments, the cathode 10 may contain a gel polymer electrolyte.

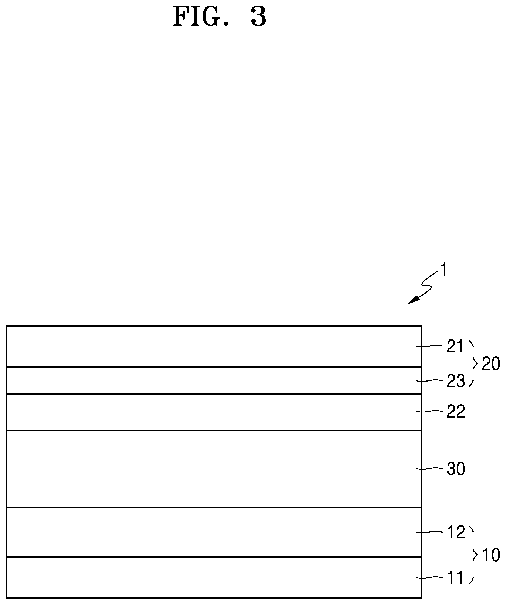

As shown in FIG. 3, an anode active material layer 23 may be further arranged between the anode current collector 21 and the protective film 22. The anode active material layer 23 may include a lithium metal or a lithium alloy.

A plated lithium layer, a lithium electrodeposition induction layer, or a combination thereof may be further included between the anode current collector 21 and the protective film 22.

The protective film 22 may be a lithium-ion conductive buffer layer and may prevent or reduce the separator 30 containing the gel polymer electrolyte from coming into contact with a lithium metal. The protective film 22 may hinder the formation and growth of lithium dendrites arranged on the anode current collector 21.

A thickness expansion ratio of the anode 20 of the lithium metal battery 1 according to some embodiments may be about 150 % or less. thickness expansion ratio (%) of anode = [thickness of plated lithium layer formed on anode current collector after charging of 100 cycles / thickness of plated lithium layer formed on anode current collector after formation] × 100

For example, the thickness expansion ratio of the anode may be about 140 % or less, about 139 % or less, about 138 % or less, about 136 % or less, or in a range of about 105 % to about 136 % or about 110 % to about 136 %. By including a binder containing a crosslinked polymer with an increased modulus, the strength of the binder may be increased, thereby suppressing a change in volume of the anode during charging or discharging. Charging and discharging conditions may be referred to in the Evaluation Example.

A binder of the protective film 22 according to some embodiments may include, for example, a vinylidene fluoride-hexafluoropropylene (VDF-HFP) copolymer, polyethylene oxide (PEO), polypropylene (PP) oxide, polydimethylsiloxane, polyacrylonitrile (PAN), polymethyl(meta)acrylate, polyvinyl chloride, polyvinylidene fluoride (PVDF), PVDF-co-hexafluoropropylene, polyethyleneimine, polyphenylene terephthalamide, polymethoxypolyethylene glycol (meth)acrylate, poly[2-methoxy ethyl glycidyl ether], or a combination thereof.

According to some embodiments, the binder of the protective film 22 may include a crosslinked polymer of a first polymer and a second polymer, which is a product of a crosslinking reaction between the first polymer containing a hydroxyl group and the second polymer having a crosslinkable functional group.

A weight ratio of the first polymer to the second polymer may be in a range of about 50:50 to about 99:1 and may be adjusted to be in a range of about 50:50 to about 90:10 or about 60:40 to about 90:10.

The second polymer may include at least one of (e.g., selected from among) fluorinated polyamic acid and/or fluorinated polyimide (PI) which have a carboxyl group.

The protective film 22 according to some embodiments may be dense and may have increased density and strength so that lithium ion movement may be free and lithium ion transfer may be improved to improve lithium electrodeposition characteristics. In some embodiments, ionic conductivity may be improved, thereby improving the high-rate characteristics of a lithium metal battery. The above-described protective film 22 may be arranged on the anode active material layer, thereby effectively blocking and suppressing side reactions between the anode active material layer and an electrolyte.

BN may have a form of at least one of nanoflakes, nanoparticles, nanoplates, nanotubes, nanoribbons, fullerene, or a combination thereof. BN may be, for example, in a nanoflake form or a two-dimensional form.

The protective film 22 including the crosslinked polymer may further include an inorganic material. The inorganic material may include any one of (e.g., selected from among) silica (SiO₂), alumina (Al₂O₃), titanium oxide (TiO₂), lithium titanium oxide (LiTiO₂), barium titanium oxide (BaTiO₂), lithium alumina (LiAlO₂), and/or zeolite, or a mixture thereof.

If the protective film 22 according to some embodiments is present on a surface of the anode active material layer 23 containing a lithium metal, the formation and/or growth of lithium dendrites on the anode current collector 21 may be effectively prevented or reduced. The cycle characteristics and stability of an anode including the above-described protective film 22 and a lithium metal battery adopting the same may be improved.

The first polymer containing the hydroxyl group may include a polymerization reaction product of at least one monomer of (e.g., selected from among) carboxymethylcellulose (CMC), polyvinyl alcohol (PVA), vinyl acetate, butyl(meth)acrylate, 2-hydroxyethyl(meth)acrylate, 2-hydroxypropyl(meth)acrylate, 4-hydroxybutyl(meth)acrylate, 6-hydroxyhexyl(meta)acrylate, 8-hydroxyoctyl(meth)acrylate, 2-hydroxyethylene glycol(meth)acrylate, 2-hydroxypropylene glycol(meth)acrylate, acrylic acid, methacrylic acid, 2-(meth)acryloyloxy acetic acid, 3-(meth)acryloyloxy propylic acid, 4-(meth)acryloyloxy butyric acid, itaconic acid, maleic acid, 2-isocyanatoethyl(meth)acrylate, 3-isocyanatopropyl(meth)acrylate, 4-isocyanatobutyl(meth)acrylate, (meth)acrylamide, ethylenedi(meth)acrylate, diethylene glycol(meth)acrylate, triethylene glycol di(meth)acrylate, trimethylene propane tri(meth)acrylate, trimethylene propane triacrylate, 1,3-butanediol(meth)acrylate, 1,6-hexanediol di(meth)acrylate, allyl acrylate, and/or N-vinyl caprolactam, or a hydrolyzate of the polymerization reaction product.

The first polymer may be PVA. For example, the PVA may be a hydrolyzate obtained by hydrolyzing polyvinyl acetate with an alkali.

A degree of saponification of the PVA may be in a range of about 60 % to about 99 %, about 70 % to about 95 %, about 75 % to about 90 %, or about 80 % to about 90 %. For example, the degree of saponification of the PVA may be in a range of about 85 % to about 90 %. In such a range of a degree of saponification, the physical properties of the protective film 22 may be further improved.

A weight average molecular weight of the first polymer may be in a range of about 10,000 Dalton to about 500,000 Dalton, about 10,000 Dalton to about 400,000 Dalton, about 10,000 Dalton to about 300,000 Dalton, about 10,000 Dalton to about 200,000 Dalton, about 50,000 Dalton to about 150,000 Dalton, about 70,000 Dalton to about 100,000 Dalton, or about 80,000 Dalton to about 100,000 Dalton. The physical properties of the protective film 22 may be further improved in a weight average molecular weight range of the first polymer.

The protective film 22 may further include the first polymer containing the hydroxyl group and the second polymer having the crosslinkable functional group. For example, the protective film 22 may further include a crosslinked polymer of the first polymer and the second polymer.

The second polymer may include at least one of (e.g., selected from among) fluorinated polyamic acid and/or fluorinated polyimide which have a carboxyl group.

For example, the fluorinated polyamic acid may be a polymer represented by Formula 6 or Formula 7, and the fluorinated polyimide may be a polymer represented by Formula 8 or Formula 9.

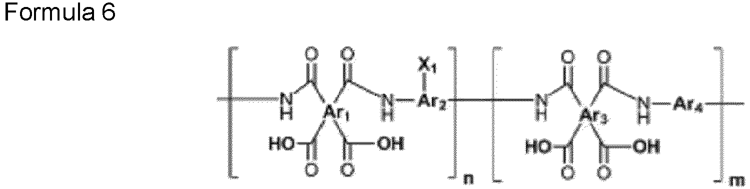

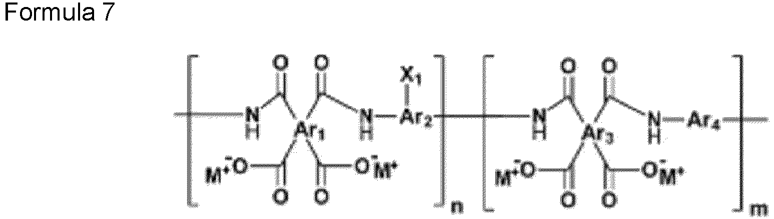

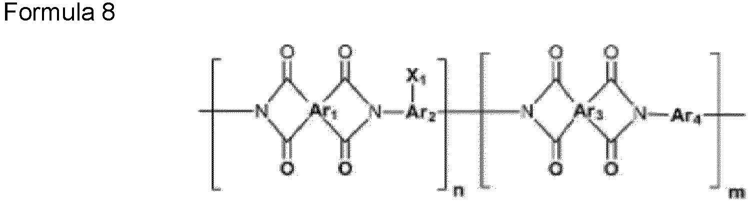

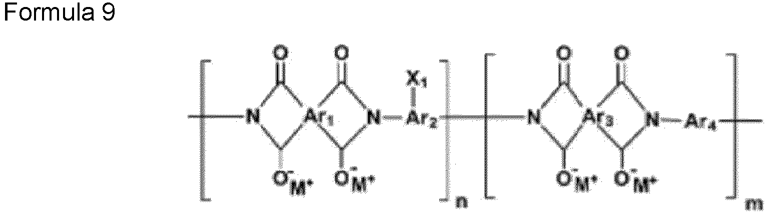

In Formulas 6 to 9, M may be an alkali metal, Ar₁ and Ar₃ may each independently be an aromatic ring group of (e.g., selected from among) a substituted or unsubstituted tetravalent C6-C24 arylene group and/or a substituted or unsubstituted tetravalent C4-C24 heteroarylene group, wherein the aromatic ring group is one aromatic ring, a ring in which two or more aromatic rings are fused, or a ring in which two or more aromatic rings are connected through a single bond, -O-, -S-, - C(=O)-, -S(=O)₂-, and/or -Si(Ra)(Rb)-, wherein Ra and Rb may each independently be a C1-C10 alkyl group,
a substituted or unsubstituted C1-C10 alkylene group, or -C(=O)-NH-,
Ar₂ and Ar₄ may each independently be an aromatic ring group of (e.g., selected from among) a substituted or unsubstituted divalent C6-C24 arylene group and/or a substituted or unsubstituted divalent C4-C24 heteroarylene group, wherein the aromatic ring group is one aromatic ring, a ring in which two or more aromatic rings are fused, or a ring in which two or more aromatic rings are connected through a single bond, -O-, -S-, -C(=O)-, -S(=O)₂-, -Si(Ra)(Rb)-, wherein Ra and Rb may each independently be a C1-C10 alkyl group, a substituted or unsubstituted C1-C10 alkylene group, or -C(=O)-NH-,
at least one of Ar₁ to Ar₄ may be substituted with a halogen group,
X₁ may be -COOH, -OH, -CO-NH₂, or -COH as a first functional group, and
n and m may each be a mole fraction, wherein 0 <n≤1, 0≤m<1, and n+m=1.

The halogen group may be a fluorine group, a chlorine group, a bromine group, or an iodine group. For example, the halogen group may be a fluorine group.

For example, Ar₁ and Ar₃ may each independently be of (e.g., selected from among) Formula 1a and/or Formula 1b , and Ar₂ and Ar₄ may each independently be of (e.g., selected from among) Formulas 1c to 1e .

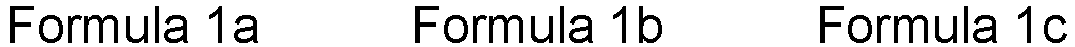

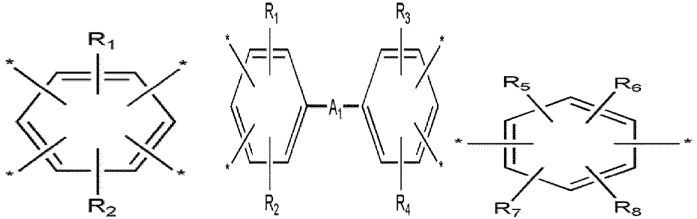

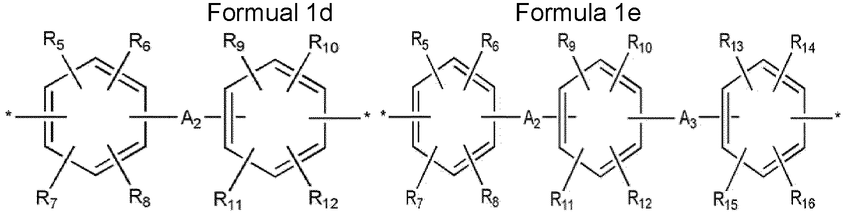

In Formulas 1a to 1e, R₁, R₂, R₃, R₄, R₅, R₆, R₇, R₈, R₉, R₁₀, R₁₁, R₁₂, R₁₃, R₁₄, R₁₅, and R₁₆ may each independently be hydrogen, a halogen, -COOH, -OH, - CO-NH₂, -COH, a C1-C10 alkyl group unsubstituted or substituted with a halogen, a C6-C20 aryl group unsubstituted or substituted with a halogen, or a C2-C20 heteroaryl group unsubstituted or substituted with a halogen, wherein at least one of R₁ to R₁₆ is a halogen group or a group substituted with a halogen group; and A₁, A₂, and As may each independently be a single bond, -O-, -C(=O)-, -S-, -S(=O)₂-, -Si(Ra)(Rb)-, wherein Ra and Rb may each independently be a C1-C10 alkyl group, a C1-C10 alkylene group unsubstituted or substituted with a halogen, or -C(=O)-NH-, wherein, in Formulas 1c to 1e from which Ar₂ is selected, at least one of R₅ to R₁₆ is -COOH, -OH, -CO-NH₂, or - COH as a first functional group.

For example, in Formulas 1a to 1e, R₁ to R₁₆ may each independently be a hydrogen atom, a halogen atom, a hydroxyl group, -CH₃, or -CFs, wherein, in Formulas 1c to 1e from which Ar₂ is selected, at least one of R₅ to R₁₆ is -COOH, -OH, -CO-NH₂, or -COH as a first functional group; and A₂ and As may each independently be a single bond, -O-, -CO-, -S-, -SO₂-, -C(CH₃)₂-, -CONH-, -C(CF₃)₂-, -CH₂-, or -CF₂-.

For example, the fluorinated polyamic acid may be a polymer represented by Formula 10 or Formula 11, and the fluorinated polyimide may be a polymer represented by Formula 12 or Formula 13.

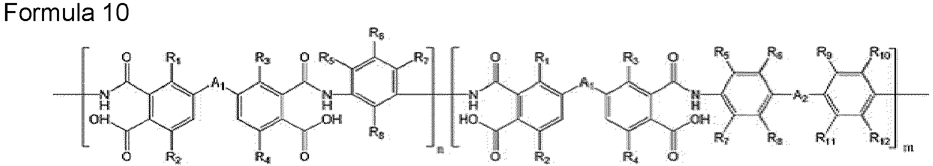

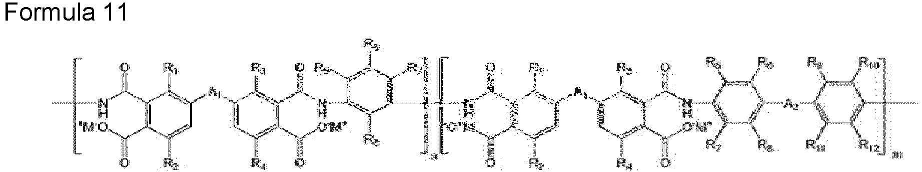

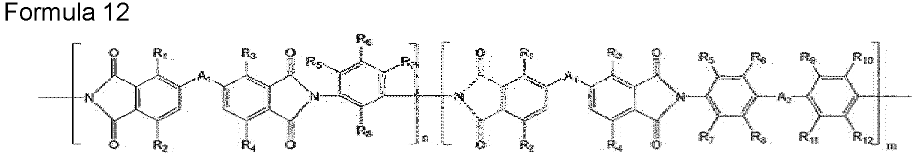

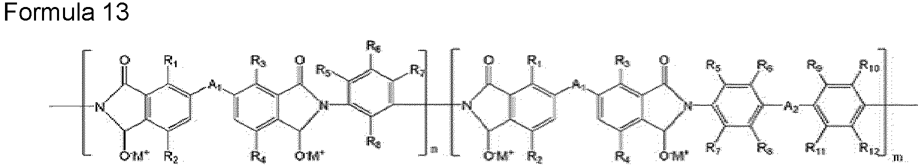

In Formulas 10 to 13, M may be lithium or sodium, R₁, R₂, R₃, R₄, R₅, R₆, R₇, R₈, R₉, R₁₀, R₁₁, and R₁₂ may each independently be hydrogen, a halogen, -COOH, - OH, -CO-NH₂, -COH, a C1-C10 alkyl group unsubstituted or substituted with a halogen, a C6-C20 aryl group unsubstituted or substituted with a halogen, or a C2-C20 heteroaryl group unsubstituted or substituted with a halogen, wherein at least one of R₁ to R₁₂ is a halogen group or a group substituted with a halogen group, A₁ and A₂ may each independently be a single bond, -O-, -S-, -C(=O)-, -S(=O)₂-, -Si(Ra)(Rb)-, wherein Ra and Rb may each independently be a C1-C10 alkyl group, a C1-C10 alkylene group unsubstituted or substituted with a halogen, or -C(=O)-NH-, wherein at least one of R₅, R₆, R₇, or R₈ is -COOH, -OH, -CO-NH₂, or -COH, and n and m may each be a mole fraction in a repeating unit, wherein 0<n≤1, 0≤m<1, and n+m=1.

The halogen group may be a fluorine group, a chlorine group, a bromine group, or an iodine group. For example, the halogen group may be a fluorine group. For example, Ar₁ and Ar₃ may each independently be of (e.g., selected from among) Formula 1a and/or Formula 1b, and Ar₂ and Ar₄ may each independently be of (e.g., selected from among) Formulas 1c to 1e.

The fluorinated polyamic acid may be a polymer represented by Formula 14 or Formula 15, and the fluorinated polyimide may be a polymer represented by Formula 16 or Formula 17.

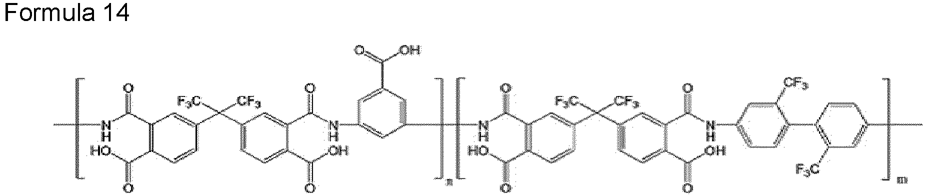

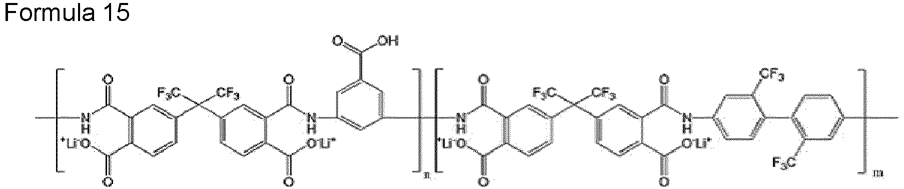

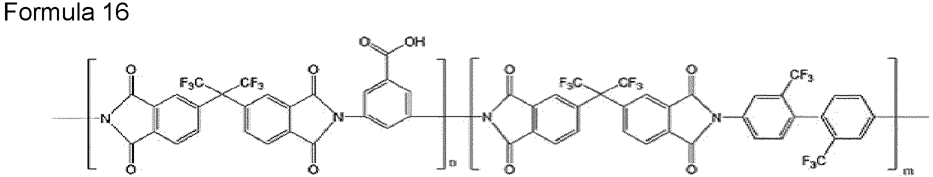

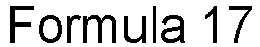

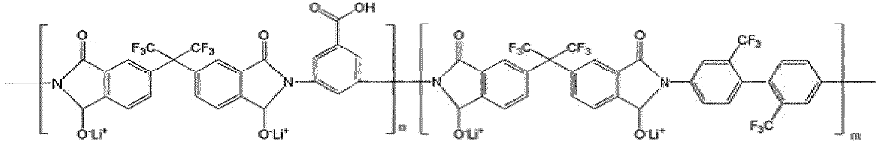

In Formulas 14 to 17, n and m may each be a mole fraction in a repeating unit, wherein 0<n≤1, 0≤m<1, and n+m=1.

For example, in the second polymer, mole fractions of a repeating unit including a crosslinking group and a repeating unit not including a crosslinking group may each satisfy 0<n≤0.5, 0.5≤m<1, and n+m=1. For example, in the second polymer, the mole fractions of the repeating unit including the crosslinking group and the repeating unit not including the crosslinking group may each satisfy 0.1≤n≤0.4, 0.6≤m≤0.9, and n+m=1. For example, in the second polymer, the mole fractions of the repeating unit including the crosslinking group and the repeating unit not including the crosslinking group may each satisfy 0.15≤n≤0.35, 0.65≤m≤0.85, and n+m=1. For example, in the second polymer, the mole fractions of the repeating unit including the crosslinking group and the repeating unit not including the crosslinking group may each satisfy 0.2≤n≤0.3, 0.7≤m≤0.8, and n+m=1. In such a mole fraction range, further improved physical properties may be provided.

For example, the second polymer may be a random copolymer. For example, the second polymer may be a block or reduce copolymer.

A weight average molecular weight of the second polymer may be in a range of about 10,000 Dalton to about 1,200,000 Dalton, about 10,000 Dalton to about 1,100,000 Dalton, about 10,000 Dalton to about 500,000 Dalton, about 100,000 Dalton to about 500,000 Dalton, or about 100,000 Dalton to about 4 00,000 Dalton, for example about 100,000 Dalton to about 300,000 Dalton. The physical properties of the protective film 22 may be further improved in a weight average molecular weight range of the second polymer.

In the protective film 22, a weight ratio of the first polymer containing the hydroxyl group to the second polymer may be in a range of about 99:1 to about 50:50, about 95:5 to about 55:45, about 95:5 to about 60:40, about 95:5 to about 65:35, or about 90:10 to about 70:30, wherein the first polymer and the second polymer are included in a third polymer. In a ratio of the weight ratio of the first polymer to the second polymer, the physical properties of the protective film 22 may be further improved.

The hydroxyl group of the first polymer and the carboxyl group of the second polymer may react with each other to form (or provide) an ester bond, thereby forming (or providing) the third polymer in which the first and second polymers are crosslinked. Due to the formation of the third polymer, the stability of the protective film 22 may be improved, and for halogen groups such as fluorine functional groups, the formation of irreversible lithium-containing materials may be reduced to improve interfacial stability.

The protective film 22 according to some embodiments may include a crosslinked polymer of PVA and polyamic acid as a crosslinked polymer. The polyamic acid may be, for example, the polymer represented by Formula 9 or Formula 10.

According to some embodiments, the crosslinked polymer of the protective film 22 may be a crosslinked polymer of PVA and fluorinated polyimide (PVA/PI-f). The fluorinated polyimide may be the polymer represented by Formula 11 or Formula 12.

The protective film 22 may include a binder and may be free of a lithium salt.

The protective film 22 may further include a lithium salt, and if (e.g., when) the protective film 22 includes the lithium salt, excellent or suitable ionic conductivity of the protective film 22 may be secured. The lithium salt may include, for example, at least one material of LiSCN, LiN(CN)₂, LiClO₄, LiBF₄, LiAsF₆, LiPF₆, LiCFsSOs, LiC(CF₃SO₂)₃, LiC(FSO₂)₃, LiN(SO₂C₂F₅)₂, LiN(SO₂CF₃)₂, LiN(SO₂F)₂, LiSbF₆, LiPF₃(CF₂CF₃)₃, LiPF₃(CF₃)₃, or LiB(C₂O₄)₂.

In the anode 20 according to some embodiments, the anode active material layer may include lithium metal foil, a lithium metal powder, lithium alloy foil, a lithium alloy powder, or a combination thereof, and the lithium alloy may contain lithium and a first metal.

The anode active material layer may include: a carbon-based compound; a mixture of a carbon-based material and at least one of (e.g., selected from among) the first metal(s); a composite of a carbon-based material and at least one of (e.g., selected from among) the first metal(s); or a combination thereof, wherein the carbon-based material includes amorphous carbon, and an average particle diameter of the amorphous carbon is in a range of about 10 nm to about 100 nm. The carbon-based material may include carbon black (CB), carbon nanotubes, carbon nanofibers, fullerene, activated carbon, carbon fiber, or a combination thereof.

The first metal may include indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, sodium, potassium, calcium, yttrium, tantalum, hafnium, barium, vanadium, strontium, lanthanum, or a combination thereof.

A lithium metal layer may be further arranged between the anode current collector 21 and one side of the protective film 22. A lithium metal layer may be further arranged on the other side of the protective film 22 opposite to the one side.

A thickness of the protective film 22 may be in a range of about 1 µm to about 10 µm , about 1 µm to about 8 µm , about 1 µm to about 7 µm , about 2 µm to about 6 µm, or about 3 µm to about 5 µm. If (e.g., when) the thickness of the protective film 22 is in such a range, internal resistance may be reduced, the energy density of a lithium battery may be excellent or suitable without being lowered, and the high-rate characteristics and lifespan characteristics thereof may be improved.

According to some aspects, a lithium metal battery may include a cathode, an anode according to some embodiments, and an electrolyte arranged between the cathode and the anode.

The electrolyte may be a liquid electrolyte, a solid electrolyte, a gel electrolyte, or a combination thereof. The electrolyte may be, for example, an organic electrolyte. For example, a lithium salt may be dissolved in an organic solvent to prepare the organic electrolyte.

The solid electrolyte may include an oxide-based solid electrolyte, a sulfide-based solid electrolyte, a polymer solid electrolyte, or a combination thereof. The gel electrolyte may have a gel state without including, for example, a polymer.

The gel electrolyte may include a polymer gel electrolyte. The cathode may include a cathode current collector and a cathode active material layer, and at least one of the cathode current collector or an anode current collector may include a base film and a metal layer arranged on one side or both (e.g., opposite) sides of the base film. The base film may include a polymer, and the polymer may include polyethylene terephthalate (PET), polyethylene (PE), PP, polybutylene terephthalate (PBT), PI, or a combination thereof.

The metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

A lithium metal may include, for example, lithium metal foil, lithium alloy foil, or a combination thereof. A lithium powder may include a lithium metal powder, a lithium alloy powder, or a combination thereof. A lithium alloy may be an alloy of lithium and a metal, which is alloyable with lithium, other than lithium. For example, the lithium alloy may be a lithium-silver alloy, a lithium-zinc alloy, a lithium-magnesium alloy, a lithium-tin alloy, and/or the like. An anode active material layer including lithium foil may be, for example, a lithium metal layer. An anode active material layer including lithium alloy foil may be, for example, a lithium metal layer. An anode active material layer including a lithium metal powder and/or a lithium alloy powder may be introduced by coating an anode current collector with a slurry including a lithium powder and a binder. The binder may be, for example, a fluorine-based binder such as PVDF. The anode active material layer may not include (e.g., may exclude) a carbon-based anode active material. In some embodiments, the anode active material layer may include (e.g., consist of) a metal-based anode active material.

A thickness of the lithium metal may be, for example, in a range of about 1 µm to about 50 µm, about 1 µm to about 30 µm, about 10 µm to about 30 µm, or about 10 µm to about 80 µm. The lithium metal may have a thickness in such a range, and thus the lifespan characteristics of a lithium battery including a protective film may be further improved. A particle diameter of the lithium powder may be, for example, in a range of about 0.1 µm to about 3 µm, about 0.1 µm to about 2 µm, or about 0.1 µm to about 2 µm. The lithium powder may have a thickness in such a range, and thus the lifespan characteristics of a lithium battery including a protective film may be further improved.

A thickness of the anode active material layer may be, for example, in a range of about 0.1 µm to about 500 µm, about 1 µm to about 500 µm, or about 10 µm to about 500, but one or more embodiments are not necessarily limited to such a range. The thickness of the anode active material layer may be adjusted according to the desirable type or kind, capacity, and/or the like of the lithium metal battery. If (e.g., when) the thickness of the anode active material layer is in such a range, cycle characteristics may be improved without a decrease in energy density of the lithium metal battery.

The lithium metal battery according to some embodiments may not include (e.g., may exclude) an anode active material layer arranged between the anode current collector and the protective film. After the anode that does not include an anode active material layer may be introduced into a lithium battery together with the cathode and the electrolyte, through charging, a lithium metal may be precipitated between the anode current collector and the protective film so that the anode may include an anode active material layer. The anode active material layer may be a plated lithium layer.

The lithium metal battery may further include a separator.

A pore diameter of the separator may be generally in a range of about 0.01 µm to about 10 µm, and a thickness thereof may be generally in a range of about 5 µm to about 20 µm. The separator may include, for example, an olefin-based polymer such as PP; or a sheet or non-woven fabric consisting of glass fiber or PE. If (e.g., when) a solid polymer electrolyte is utilized as an electrolyte, the solid polymer electrolyte may serve as the separator.

A specific example of the olefin-based polymer in the separator may include PE or PP, or a multilayer film of two or more layers thereof may be utilized. A mixed multilayer film such as a PE/PP two-layer separator, a PE/PP/PE three-layer separator, or a PP/PE/PP three-layer separator may be utilized.

In the lithium metal battery according to some embodiments, the liquid electrolyte may include a lithium salt and an organic solvent.

Examples of the organic solvent may include non-protic organic solvents such as N-methyl-2-pyrrolidinone, PC, EC, BC, DMC, DEC, gamma-butyrolactone, 1,2-dimethoxyethane, tetrahydroxy franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, a dioxolane derivative, sulfolane, methyl sulfolane, 1,3-dimethyl-2-imidazolidinone, a PC derivative, a tetrahydrofuran derivative, ether, methyl propionate, ethyl propionate, and ethyl propionate. Among the non-protic organic solvents, a carbonate-based solvent such as PC, EC, BC, DMC, or DEC may be utilized.

Any material may be utilized as the lithium salt as long as the material may be suitable in lithium secondary batteries. The lithium salt may include, for example, at least one of LiSCN, LiN(CN)₂, LiClO₄, LiBF₄, LiAsF₆, LiPF₆, LiCFsSOs, LiC(CF₃SO₂)₃, LiC(FSO₂)₃, LiN(SO₂C₂F₅)₂, LiN(SO₂CF₃)₂, LiN(SO₂F)₂, LiSbF₆, LiPF₃(CF₂CF₃)₃, LiPF₃(CF₃)₃, or LiB(C₂O₄)₂ which are a material easily soluble in a non-aqueous solvent.

A concentration of the lithium salt may be, for example, in a range of about 1 M to about 5 M, for example, about 1 M to about 2.5 M in the liquid electrolyte. In such a range, a sufficient amount of lithium ions required for charging or discharging of the lithium metal battery may be generated.

If (e.g., when) a gel polymer electrolyte is present in pores of a porous substrate, the interfacial resistance between the cathode and anode, and the separator may be minimized or reduced, and lithium may be easily moved.

According to some embodiments, the anode active material layer may be arranged at the time of assembling the lithium metal battery. According to some embodiments, the anode active material layer may include an anode active material layer due to a lithium metal being precipitated after charging. The anode active material layer may be a plated lithium layer.

The anode active material layer may include a lithium metal or a lithium alloy.

If (e.g., when) the anode active material layer is arranged at the time of the assembling, the anode active material layer may include a carbon-based material alone or may include a carbon-based material and at least one of a metal or a metalloid.

The carbon-based material may include amorphous carbon, and an average particle diameter of the amorphous carbon may be in a range of about 10 nm to about 100 nm. The carbon-based material may include carbon black (CB), acetylene black (AB), furnace black (FB), Ketjen black (KB), graphene, or a combination thereof.

The anode active material layer may include lithium metal foil, a lithium metal powder, lithium alloy foil, a lithium alloy powder, or a combination thereof, and the lithium alloy may contain lithium and a first metal.

The first metal may include indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, sodium, potassium, calcium, yttrium, tantalum, hafnium, barium, vanadium, strontium, lanthanum, or a combination thereof.

The anode active material layer may include, for example, lithium foil, a lithium powder, or a combination thereof. The lithium foil may include, for example, lithium metal foil, lithium alloy foil, or a combination thereof. The lithium powder may include a lithium metal powder, a lithium alloy powder, or a combination thereof. The lithium alloy may be an alloy of lithium and a metal, which is alloyable with lithium, other than lithium. For example, the lithium alloy may be a lithium-silver alloy, a lithium-zinc alloy, a lithium-magnesium alloy, a lithium-tin alloy, and/or the like. An anode active material layer including lithium foil may be, for example, a lithium metal layer. An anode active material layer including lithium alloy foil may be, for example, a lithium metal layer. An anode active material layer including a lithium metal powder and/or a lithium alloy powder may be introduced by coating the anode current collector with a slurry including a lithium powder and a binder. The binder may be, for example, a fluorine-based binder such as PVDF. The anode active material layer may not include (e.g., may exclude) a carbon-based anode active material. In some embodiments, the anode active material layer may include (e.g., consist of) a metal-based anode active material.

The anode current collector may include (e.g., consist of), for example, a material that does not react with lithium, for example, a metal that does not form (or does not provide) both (e.g., simultaneously) an alloy and a compound together with lithium. Examples of a material constituting the anode current collector may include copper (Cu), stainless steel, titanium (Ti), iron (Fe), cobalt (Co), nickel (Ni), and/or the like, but one or more embodiments are not necessarily limited thereto. Any material may be utilized along as the material may be suitable in an electrode current collector in the art. The negative electrode current collector may include (e.g., consist of) one of (e.g., selected from among) the above-described metals or an alloy of two or more metals or a coating material. The anode current collector may be, for example, in the form of a plate or foil.

In some embodiments of the present disclosure, the cathode current collector may include, for example, a plate or foil consisting of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. A thickness of the cathode current collector may be, for example, in a range of about 1 µm to about 100 µm, about 1 µm to about 50 µm, about 5 µm to about 25 µm, or about 10 µm to about 20 µm.

The anode active material layer may contain an anode active material and a binder.

The anode active material may include particles (e.g., may have a particle form). An average particle diameter of the anode active material having the particle form may be, for example, in a range of about 10 nm to about 4 µm, about 10 nm to about 1 µm, about 10 nm to about 500 nm, about 10 nm to about 100 nm, or about 20 nm to about 80 nm. The anode active material may have an average particle diameter in such a range, reversible precipitation and/or dissolution of lithium may be more easily performed during charging/discharging. The average particle diameter of the anode active material may be, for example, a median diameter (D50) measured by utilizing a laser type or kind particle size distribution meter.

The anode active material may include, for example, at least one of (e.g., selected from among) a carbon-based anode active material and/or a metal and/or metalloid anode active material. The carbon-based anode active material may be, for example, amorphous carbon. Examples of the carbon-based anode active material may include CB, AB, FB, KB, graphene, and/or the like, but one or more embodiments are not necessarily limited thereto. Any material may be utilized as long as the material may be classified as amorphous carbon in the art. The amorphous carbon may be carbon that has no crystallinity or relatively low crystallinity and may be distinguished from crystalline carbon or graphite-based carbon. The metal or metalloid anode active material may include at least one of (e.g., selected from among) gold (Au), platinum (Pt), palladium (Pd), silicon (Si), silver (Ag), aluminum (Al), bismuth (Bi), tin (Sn), and/or zinc (Zn), but one or more embodiments are not necessarily limited thereto. Any material may be utilized as long as the material may be utilized as a metal anode active material or a metalloid anode active material which forms an alloy or compound together with lithium in the art. For example, nickel (Ni) may not form (or not provide) an alloy together with lithium and thus may not be a metal anode active material in the present specification. The anode active material layer may include one type or kind of anode active material among such anode active materials or a mixture of a plurality of different anode active materials. The anode active material layer may include, for example, a mixture of amorphous carbon and at least one of (e.g., selected from among) gold (Au), platinum (Pt), palladium (Pd), silicon (Si), silver (Ag), aluminum (Al), bismuth (Bi), tin (Sn), and/or zinc (Zn). A mixing ratio of the mixture may be, for example, a weight ratio of about 10:1 to about 1:2, about 10:1 to about 1:1, about 7:1 to about 1:1, about 5:1 to about 1:1, or about 4:1 to about 2:1. The anode active material included in the anode active material layer may include, for example, a mixture of first particles including (e.g., consisting of) amorphous carbon and second particles including (e.g., consisting of) metal or metalloid. Examples of the metal may include, for example, gold (Au), platinum (Pt), palladium (Pd), silicon (Si), silver (Ag), aluminum (Al), bismuth (Bi), tin (Sn), zinc (Zn), and/or the like. A content (e.g., amount) of the second particles may be in a range of about 8 wt% to about 60 wt%, about 10 wt% to about 50 wt%, about 15 wt% to about 40 wt%, or about 20 wt% to about 30 wt% with respect to the total weight of the mixture. The content (e.g., amount) of the second particles may be in such a range, and thus for example, the cycle characteristics of the lithium metal battery may be further improved.

The binder included in the anode active material layer may include, for example, styrene-butadiene rubber (SBR), polytetrafluoroethylene (PTFE), PVDF, PE, a vinylidene fluoride/hexafluoropropylene copolymer, PAN, polymethyl methacrylate, and/or the like, but one or more embodiments are not necessarily limited thereto. Any material may be utilized as long as the material may be utilized as a binder in the art. The binder may be provided as a single binder or a plurality of different binders. If (e.g., when) the anode active material layer does not include a binder, the anode active material layer may be easily separated from a ceramic coating layer or the anode current collector. A content (e.g., amount) of the binder included in the anode active material layer may be, for example, in a range of about 1 wt% to about 20 wt% with respect to the total weight of the anode active material layer.

A thickness of the anode active material layer may be, for example, in a range of about 0.1 µm to about 50 µm, or about 100 µm to about 50 µm. The thickness of the anode active material layer may be, for example, in a range of about 1 % to about 50 %, about 1 % to about 30 %, about 1 % to about 10 %, or about 1 % to about 5 % of a thickness of the cathode active material layer. If (e.g., when) the anode active material layer is excessively thin, lithium dendrites formed between the anode active material layer and the anode current collector may collapse the anode active material layer, which may make it difficult to improve the cycle characteristics of the lithium metal battery. If (e.g., when) the thickness of the anode active material layer excessively increases (e.g., increases higher than the above ranges), the energy density of the lithium metal battery adopting the anode may decrease, and the cycle characteristics thereof may be difficult to improve.

If (e.g., when) the thickness of the anode active material layer decreases, for example, the charge capacity of the anode active material layer may also decrease. The charge capacity of the anode active material layer may be, for example, in a range of about 0.1 % to about 50 %, about 1 % to about 30 %, about 1 % to about 10 %, about 1 % to about 5%, or about 1 % to about 2% of charge capacity. If (e.g., when) the charge capacity of the anode active material layer is excessively low (e.g., lower than the above ranges), lithium dendrites formed between the anode active material layer and the anode current collector may collapse the anode active material layer, which may make it difficult to improve the cycle characteristics of the lithium metal battery. If (e.g., when) the charge capacity of the anode active material layer excessively increases (e.g., increases higher than the above ranges), the energy density of the lithium metal battery adopting the anode may decrease, and the cycle characteristics thereof may be difficult to improve. A charge capacity of the cathode active material layer may be obtained by multiplying a charge capacity density (mAh/g) of a cathode active material by a mass of the cathode active material in the cathode active material layer. If (e.g., when) several types (kinds) of cathode active materials are utilized, a value of charge capacity density×mass may be calculated for each cathode active material, and the sum of the values may be the charge capacity of the cathode active material layer. The charge capacity of the anode active material layer may also be calculated in substantially the same way. For example, the charge capacity of the anode active material layer may be obtained by multiplying a charge capacity density (mAh/g) of an anode active material by a mass of the anode active material in the anode active material layer. If (e.g., when) several types (kinds) of anode active materials are utilized, a value of charge capacity density×mass may be calculated for each anode active material, and the sum of the values may be the charge capacity of the anode active material layer. In some embodiments, the charge capacity densities of the cathode active material and the anode active material may be capacities estimated by utilizing an all-solid half-cell utilizing a lithium metal as a counter electrode. The charge capacities of the cathode active material layer and the anode active material layer may be directly measured by measuring charge capacity by utilizing an all-solid half-cell. If (e.g., when) the measured charge capacity is divided by a mass of each active material, a charge capacity density may be obtained. In some embodiments, the charge capacities of the cathode active material layer and the anode active material layer may be initial charge capacities measured during charging of a first cycle.

### Lithium metal battery

A lithium metal battery according to some embodiments may include a cathode, an anode, and an electrolyte arranged between the cathode and the anode. The lithium metal battery may further include a separator. The lithium metal battery may concurrently (e.g., simultaneously) provide excellent or suitable lifespan characteristics. The lithium metal battery may be, for example, a lithium primary battery, a lithium secondary battery, a lithium-sulfur battery, a lithium-air battery, and/or the like but is not limited thereto. Any lithium metal battery may be utilized as long as the lithium metal battery may be utilized in the art.

For example, the lithium metal battery may be manufactured through the following example methods, but one or more embodiments are not necessarily limited thereto. A method may be adjusted according to desired conditions.

### Cathode

First, a cathode active material, a conductive agent, a binder, and a solvent may be mixed to prepare a cathode active material composition. The prepared cathode active material composition may be applied directly onto an aluminum current collector and dried to prepare a cathode plate on which a cathode active material layer is formed (or provided). In some embodiments, the cathode active material composition may be cast on a separate support, and then a film obtained by being peeled off of the support may be laminated on the aluminum current collector to prepare a cathode plate on which a cathode active material layer is formed (or provided).

A compound (lithiated intercalation compound) capable of reversibly intercalating and deintercalating lithium may be utilized as the cathode active material. For example, at least one composite oxide of lithium and a metal, the metal being at least one of (e.g., selected from among) cobalt, manganese, nickel, and/or one or more combinations thereof may be utilized.

The composite oxide may be a lithium transition metal composite oxide, and specific examples thereof may include lithium nickel-based oxide, lithium cobalt-based oxide, lithium manganese-based oxide, a lithium iron phosphate-based compound, cobalt-free nickel-manganese-based oxide, or a combination thereof.

For example, a compound represented by any one of (e.g., selected from among) formulas may be utilized: LiₐA_{1-b}X_{b}O_{2-c}D_{c}, wherein 0.90≤a≤1.8, 0≤b≤0.5, and 0≤c≤0.05; LiₐMn_{2-b}X_{b}O_{4-c}D_{c}, wherein 0.90≤a≤1.8, 0≤b≤0.5, and 0≤c≤0.05; LiₐNi_{1-b-c}Co_{b}X_{c}O_{2-α}D_{α}, wherein 0.90≤a≤1.8, 0≤b≤0.5, and 0≤c≤0.5, 0<α<2; LiₐNi_{1-b-c}Mn_{b}X_{c}O_{2-α}D_{α}, wherein 0.90≤a≤1.8, 0≤b≤0.5, 0≤c≤0.5, and 0<α<2; LiₐNi_{b}Co_{c}L¹_{d}GₑO₂, wherein 0.90≤a≤1.8, 0≤b≤0.9, 0≤c≤0.5, 0≤d≤0.5, and 0≤e≤0.1; LiₐNiG_{b}O₂, wherein 0.90≤a≤1.8 and 0.001≤b≤0.1; LiₐCoG_{b}O₂, wherein 0.90≤a≤1.8 and 0.001≤b≤0.1; LiₐMn_{1-b}G_{b}O₂, wherein 0.90≤a≤1.8 and 0.001≤b≤0.1; LiₐMn₂G_{b}O₄, wherein 0.90≤a≤1.8 and 0.001≤b≤0.1; LiₐMn_{1-g}G_{g}PO₄, wherein 0.90≤a≤1.8 and 0≤g≤0.5; Li_{(3-f)}Fe₂(PO₄)₃, wherein 0≤f≤2; and/or LiₐFePO₄, wherein 0.90≤a≤1.8

In the above formulas, A may be Ni, Co, Mn, or a combination thereof; X may be Al, Ni, Co, Mn, Cr, Fe, Mg, Sr, V, a rare earth element, or a combination thereof; D may be O, F, S, P, or a combination thereof; G may be Al, Cr, Mn, Fe, Mg, La, Ce, Sr, V, or a combination thereof; and L¹ may be Mn, Al, or a combination thereof.

For example, the cathode active material may be a high-nickel-based cathode active material in which, in the lithium transition metal composite oxide, a content (e.g., amount) of nickel is about 80 mol% or more, about 85 mol% or more, about 90 mol% or more, about 91 mol% or more, or in a range of about 94 mol% to about 99 mol% with respect to about 100 mol% of a metal excluding lithium. The high-nickel-based cathode active material may implement high capacity and thus may be applied to high-capacity and high-density lithium secondary batteries.

The cathode active material may include, for example, LiₐNiₓCo_{y}M_{z}O_{2-b}A_{b}, wherein 1.0≤a≤1.2, 0≤b≤0.2, 0.8≤x<1, 0<y≤0.3, 0<z≤0.3, x+y+z=1, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof; LiNiₓCo_{y}Mn_{z}O₂, wherein 0.8≤x≤0.95, 0≤y≤0.2, 0<z≤0.2, and x+y+z=1; LiNiₓCo_{y}Al_{z}O₂, wherein 0.8≤x≤0.95, 0≤y≤0.2, 0<z≤0.2, and x+y+z=1; LiNiₓCo_{y}Mn_{z}Al_{w}O₂, wherein 0.8≤x≤0.95, 0≤y≤0.2, 0<z≤0.2, 0<w≤0.2, and x+y+z+w=1; LiₐCoₓM_{y}O_{2-b}A_{b}, wherein 1.0≤a≤1.2, 0≤b≤0.2, 0.9≤x≤1, 0≤y≤0.1, x+y=1, M is manganese (Mn), niobium (Nb), vanadium (V), magnesium (Mg), gallium (Ga), silicon (Si), tungsten (W), molybdenum (Mo), iron (Fe), chromium (Cr) ), copper (Cu), zinc (Zn), titanium (Ti), aluminum (Al), boron (B), or a combination thereof, and A is F, S, Cl, Br, or a combination thereof; LiₐNiₓMn_{y}M'_{z}O_{2-b}A_{b}, wherein 1.0≤a≤1.2, 0≤b≤0.2, 0<x≤0.3, 0.5≤y<1, 0<z≤0.3, x+y+z=1, M' is cobalt (Co), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B), or a combination thereof, and A is F, S, Cl, Br, or a combination thereof; LiₐM1ₓM2_{y}PO_{4-b}X_{b}, wherein 0.90≤a≤1.1, 0≤x≤0.9, 0≤y≤0.5, 0.9<x+y<1.1, 0≤b≤2, M1 is chromium (Cr), manganese (Mn), iron (Fe), cobalt (Co), nickel (Ni), copper (Cu), zirconium (Zr), or a combination thereof, M2 is magnesium (Mg), calcium (Ca), strontium (Sr), barium (Ba), titanium (Ti), zinc (Zn), boron (B), niobium (Nb), gallium (Ga), indium (In) ), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof; or LiₐM3_{z}PO₄, wherein 0.90≤a≤1.1, 0.9≤z≤1.1, and M3 is chromium (Cr), manganese (Mn), iron (Fe), cobalt (Co), nickel (Ni), copper (Cu), zirconium (Zr), or a combination thereof.

Examples of the conductive agent may include CB, graphite particles, natural graphite, artificial graphite, AB, KB, and carbon fiber; carbon nanotubes; a metal powder, a metal fiber, or a metal tube of copper, nickel, aluminum, or silver; and a conductive polymer such as a polyphenylene derivative, but one or more embodiments are not limited thereto. Any material may be utilized as long as the material may be utilized as a conductive material in the art. In some embodiments, the cathode may not include (e.g., may exclude), for example, a separate conductive material.

Examples of the binder may include a vinylidene fluoride/hexafluoropropylene copolymer, PVDF, PAN, polymethyl methacrylate, PTFE, a mixture of the above polymers, an SBR-based polymer, and/or the like. Examples of the solvent may include N-methylpyrrolidone (NMP), acetone, water, and/or the like, but one or more embodiments are not necessarily limited thereto. Any material may be utilized as long as the material may be utilized in the art.

A cathode for a lithium secondary battery may include a cathode current collector and a cathode active material layer formed (or provided) on the current collector. The cathode active material layer may include a cathode active material and may further include a binder and/or a conductive material.

For example, the cathode may further include an additive that may serve as a sacrificial cathode.

A content (e.g., amount) of the cathode active material may be in a range of about 9 wt% to about 99.5 wt% with respect to about 100 wt% of the cathode active material layer, and a content (e.g., amount) of each of the binder and the conductive material may be in a range of about 0.5 wt% to about 5 wt% with respect to about 100 wt% of the cathode active material layer.

The binder may serve to attach cathode active material particles well to each other and also to attach the cathode active material well to a current collector. Representative examples of the binder may include PVA, carboxymethyl cellulose, hydroxypropyl cellulose, diacetyl cellulose, polyvinyl chloride, carboxylated polyvinyl chloride, polyvinyl fluoride (PVF), a polymer including ethylene oxide, polyvinylpyrrolidone, polyurethane, PTFE, PVDF, PE, PP, SBR, (meth)acrylated SBR, an epoxy resin, a (meth)acrylic resin, polyester resin, nylon, and/or the like, but one or more embodiments are not limited thereto.

The conductive material may be utilized to impart conductivity to an electrode, and any electron-conductive material may be utilized as long as the electron-conductive material may not cause a chemical change in a battery to be constructed. Examples of the conductive material may include a carbon-based material such as natural graphite, artificial graphite, CB, AB, KB, carbon fiber, carbon nanofibers, or carbon nanotubes; a metal-based material containing copper, nickel, aluminum, silver, and/or the like and including a metal powder or metal fiber (e.g., having a form of a metal powder or metal fiber); a conductive polymer such as a polyphenylene derivative; or a mixture thereof.

The cathode current collector may be provided as a plate, foil, and/or the like including (e.g., consisting of), for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. A thickness of the cathode current collector may be, for example, in a range of about 1 µm to about 100 µm, about 1 µm to about 50 µm , about 5 µm to about 25 µm , or about 10 µm to about 20 µm.

The cathode current collector may include, for example, a base film and a metal layer arranged on one side or both (e.g., opposite) sides of the base film. The base film may include, for example, a polymer. The polymer may be, for example, a thermoplastic polymer. The polymer may include, for example, PET, PE, PP, PBT, PI, or a combination thereof. The base film may be, for example, an insulator. The base film may include an insulating thermoplastic polymer, and thus, if (e.g., when) a short circuit occurs, the base film may soften or liquefy to interrupt the operation of a battery, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may serve as an electrochemical fuse and may be cut if (e.g., when) an overcurrent occurs, thereby performing a short circuit prevention function. A thickness of the metal layer may be adjusted to adjust a limit current and a maximum current. The metal layer may be electrodeposited or deposited on the base film. If (e.g., when) the thickness of the metal layer is decreased, a limit current and/or a maximum current of the cathode current collector may be decreased, and thus the stability of a lithium battery during a short circuit may be improved. A lead tab may be added onto the metal layer for external connection. The lead tab may be welded to the metal layer or a metal layer/base film stack through ultrasonic welding, laser welding, spot welding, and/or the like. While the base film and/or the metal layer are melted during welding, the metal layer may be electrically connected to the lead tab. In order to more strongly weld the metal layer and the lead tab, a metal chip may be added between the metal layer and the lead tab. The metal chip may be a flake, the flake and the metal of the metal layer may include the same material. The metal chip may be, for example, metal foil or a metal mesh. The metal chip may be, for example, aluminum foil, copper foil, or SUS foil. The metal chip may be arranged on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. A thickness of the base film may be, for example, in a range of about 1 µm to µm 50 µm, about 1.5 µm to about 50 µm, about 1.5 µm to about 40 µm, or about 1 µm to about 30 µm. The base film may have a thickness in such a range, and thus a weight of an electrode assembly may be more effectively reduced. A melting point of the base film may be, for example, in a range of about 100 °C to about 300 °C, about 100 °C to about 250 °C, or about 100 °C to about 200 °C. The base film may have a melting point in such a range, and thus the base film may be melted and easily coupled to the lead tab in a process of welding the lead tab. In order to improve adhesive strength between the base film and the metal layer, surface treatment such as corona treatment may be performed on the base film. A thickness of the metal layer may be, for example, in a range of about 0.01 µm to about 3 µm, about 0.1 µm to about 3 µm, about 0.1 µm to about 2 µm, or about 0.1 µm to about 1 µm. The metal layer may have a thickness in such a range, and thus the stability of an electrode assembly may be secured while conductivity is maintained. A thickness of the metal chip may be, for example, in a range of about 2 µm to about 10 µm, about 2 µm to about 7 µm, or about 4 µm to about 6 µm. The metal chip may have a thickness in such a range, and thus the metal layer and the lead tab may be more easily connected. The cathode current collector may have such a structure, and thus the weight of the cathode may be reduced, thereby improving the energy density of the cathode a lithium metal battery.

### Electrolyte

Next, the electrolyte may be prepared. The electrolyte may be, for example, a liquid electrolyte, a solid electrolyte, a gel electrolyte, or a combination thereof. The electrolyte may be, for example, an organic electrolyte. The liquid electrolyte may be as described in the liquid electrolyte of the gel polymer electrolyte.

The solid electrolyte may be, for example, an oxide-based solid electrolyte, a sulfide-based solid electrolyte, a polymer-based solid electrolyte, or a combination thereof.

The solid electrolyte may be, for example, an oxide-based solid electrolyte. The oxide-based solid electrolyte may include at least one of (e.g., selected from among) Li_{1+x+y}AlₓTi₂₋ₓSi_{y}P_{3-y}O₁₂, wherein 0<x<2 and 0≤y<3, BaTiO₃, Pb(Zr,Ti)O₃(PZT), Pb₁₋ₓLaₓZr_{1-y} Ti_{y}O₃ (PLZT), wherein O≤x<1 and O≤y<1, PB(Mg₃Nb_{2/3})O₃-PbTiO₃ (PMN-PT), HfO₂, SrTiOs, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃, wherein 0<x<2 and 0<y<3, LiₓAl_{y}Ti_{z}(PO₄)₃, wherein 0<x<2, 0<y<1, and 0<z<3, Li_{1+x+y}(Al, Ga)ₓ(Ti, Ge)₂₋ₓSi_{y}P_{3-y}O₁₂, wherein 0≤x≤1 and 0≤y≤1, LiₓLa_{y}TiO₃, wherein 0<x<2 and 0<y<3, Li₂O, LiOH, Li₂CO₃, LiAlO₂, Li₂O-Al₂O₃-SiO₂-P₂O₅-TiO₂-GeO₂, and Li₃₊ₓLa₃M₂O₁₂, wherein M=Te, Nb, or Zr, and x is an integer from 1 to 10. The solid electrolyte may be prepared through sintering and/or the like. For example, the oxide-based solid electrolyte may be a garnet-type or kind (e.g., garnet) solid electrode of (e.g., selected from among) Li₇La₃Zr₂O₁₂ (LLZO) and/or Li₃₊ₓLa₃Zr₂₋ₐMₐO₁₂ (LLZO doped with M), wherein M=Ga, W, Nb, Ta, or Al, and x is an integer from 1 to 10.

The sulfide-based solid electrolyte may include, for example, lithium sulfide, silicon sulfide, phosphorus sulfide, boron sulfide, or a combination thereof. Sulfide-based solid electrolyte particles may include Li₂S, P₂S₅, SiS₂, GeS₂, B₂S₃, or a combination thereof. The sulfide-based solid electrolyte particles may include Li₂S or P₂S₅. The sulfide-based solid electrolyte particles are suitable to have higher lithium ion conductivity than other inorganic compounds. For example, the sulfide-based solid electrolyte may include Li₂S and P₂S₅. If (e.g., when) a sulfide solid electrolyte material constituting the sulfide-based solid electrolyte includes Li₂S-P₂S₅, a mixing molar ratio of Li₂S to P₂S₅ may be, for example, in a range of about 50:50 to about 90:10. In some embodiments, an inorganic solid electrolyte, which is prepared by adding Li₃PO₄, a halogen, a halogen compound, Li₂₊₂ₓZn₁₋ₓGeO₄ ("LISICON"), wherein 0≤x<1, Li_{3+y}PO₄₋ₓNₓ (LIPON), wherein 0<x<4 and 0<y<3, Li_{3.25}Ge_{0.25}P_{0.75}S₄ ("Thio LISICON"), Li₂O-Al₂O₃-TiO₂-P₂O₅ "(LATP"), and/or the like to Li₂S-P₂S₅, SiS₂, GeS₂, B₂S₃, or a combination, may be utilized as the sulfide-based solid electrolyte. Non-limiting examples of the sulfide solid electrolyte material may include Li₂S-P₂S₅; Li₂S-P₂S₅-LiX, wherein X is a halogen element; Li₂S-P₂S₅-Li₂O; Li₂S-P₂S₅-Li₂O-Lil; Li₂S-SiS₂; Li₂S-SiS₂-Lil; Li₂S-SiS₂-LiBr; Li₂S-SiS₂-LiCl; Li₂S-SiS₂-B₂S₃-Lil; Li₂S-SiS₂-P₂S₅-Lil; Li₂S-B₂S₃; Li₂S -P₂S₅-ZₘSₙ, wherein 0<m<10, 0<n<10, and Z=Ge, Zn, or Ga; Li₂S-GeS₂; Li₂S-SiS₂-Li₃PO₄; and Li₂S-SiS₂-LiₚMO_{q}, wherein 0<p<10, 0<q<10, and M=P, Si, Ge, B, Al, Ga, or In. In this regard, a sulfide-based solid electrolyte material may be prepared by treating a raw starting material (for example, Li₂S or P₂S₅) of the sulfide-based solid electrolyte material through melt quenching, mechanical milling, and/or the like. In some embodiments, a calcination process may be performed after the treating. The sulfide-based solid electrolyte may be in an amorphous state, a crystalline state, or a mixture state thereof.

For example, the polymer solid electrolyte may include a mixture of lithium salt and a polymer or may include a polymer having an ion-conductive functional group. The polymer solid electrolyte may be, for example, a polymer electrolyte that is in a solid state at a temperature of about 25 °C and a pressure of about 1 atm. The polymer solid electrolyte may not include (e.g., may exclude), for example, a liquid. The polymer solid electrolyte may include a polymer, and the polymer may include, for example, PEO, PVDF, PVDF-HFP, a poly(styrene-b-ethylene oxide) (PS-PEO) block or reduce copolymer, poly(styrene-butadiene), poly(styrene-isoprene-styrene), a poly(styrene-b-divinylbenzene) block or reduce copolymer, a poly(styrene-ethylene oxide-styrene) block or reduce copolymer, polystyrene sulfonate (PSS), PVF, poly(methylmethacrylate) (PMMA), polyethylene glycol (PEG), PAN, polytetrafluoroelene (PTFE), polyethylenedioxythiophene (PEDOT), polypyrrole (PPY), PAN, polyaniline, poly acetylene, NAFION^{™} AQUIVION^{®}, FLEMION^{®}, GORE^{™}, ACIPLEX^{™}, MORGANE^{®}-ADP, sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi⁺), or a combination thereof, but one or more embodiments are not limited thereto. Any material may be utilized as long as the material may be utilized in a polymer electrolyte in the art. Any material may be utilized as the lithium salt as long as the material may be utilized as a lithium salt in the art. The lithium salt may include, for example, LiPF₆, LiBF₄, LiSbF₆, LiAsF₆, LiClO₄, LiCFsSOs, Li(CF₃SO₂)₂N, LiC₄F₉SO₃, LiAlO₂, LiAlCl₄, LiN(CₓF₂ₓ₊₁SO₂)(C_{y}F_{2y+1}SO₂), wherein x and y are each a natural number from 1 to 20, LiCl, Lil, or a mixture thereof. A polymer included in the polymer solid electrolyte may be, for example, a compound including 10 or more, 20 or more, 50 or more, or 100 or more repeating units. A weight average molecular weight of the polymer included in the polymer solid electrolyte may be, for example, about 1,000 Dalton or more, about 10,000 Dalton or more, about 100,000 Dalton or more, or about 1,000,000 Dalton or more.

The gel electrolyte may be, for example, a polymer gel electrolyte. The gel electrolyte may have a gel state without including, for example, a polymer.

The polymer gel electrolyte may include, for example, a liquid electrolyte and a polymer or may include an organic solvent and a polymer having an ion-conductive functional group. The polymer gel electrolyte may be, for example, a polymer electrolyte that is in a gel state at a temperature of about 25 °C and a pressure of about 1 atm. The polymer gel electrolyte may have, for example, a gel state without including a liquid. The liquid electrolyte utilized in the polymer gel electrolyte may include, for example, a mixture of an ionic liquid, a lithium salt, and an organic solvent, a mixture of a lithium salt and an organic solvent, a mixture of an ionic liquid and an organic solvent, or a mixture of a lithium salt and an ionic liquid. The polymer utilized in the polymer gel electrolyte may be of (e.g., selected from among) polymers utilized in a solid polymer electrolyte. The organic solvent may be of (e.g., selected from among) organic solvents utilized in a liquid electrolyte. The lithium salt may be of (e.g., selected from among) lithium salts utilized in a polymer solid electrolyte. The ionic liquid may refer to a salt in a liquid state at room temperature or a room-temperature molten salt that has a melting point at room temperature or less and includes (e.g., consists of) only ions. The ionic liquid may include, for example, at least one of (e.g., selected from among) compounds including a) one cation of (e.g., selected from among) an ammonium-based cation, a pyrrolidinium-based cation, pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazole-based cation, and/or one or more mixtures thereof, and b) at least one anion of (e.g., selected from among) BF₄₋, PF₆₋, AsF₆₋, SbF₆₋, AlCl₄-, HSO₄-, ClO₄-, CH₃SO₃-, CF₃CO₂-, Cl-, Br-, I-, BF₄-, SO₄-, CF₃SO₃-, (FSO₂)₂N-, (C₂F₅SO₂)₂N-, (C₂F₅SO₂)(CF₃SO₂)N-, and/or (CF₃SO₂)₂N-. The polymer solid electrolyte may be impregnated, for example, in a liquid electrolyte in a secondary battery to form (or provide) a polymer gel electrolyte. The polymer gel electrolyte may further include inorganic particles. The polymer included in the polymer gel electrolyte may be, for example, a compound including 10 or more, 20 or more, 50 or more, or 100 or more repeating units. A weight average molecular weight of the polymer included in the polymer gel electrolyte may be, for example, about 500 Dalton or more, about 1,000 Dalton or more, about 10,000 Dalton or more, about 100,000 Dalton or more, or about 1,000,000 Dalton or more.

### Anode

The anode may include an anode current collector.

In some embodiments, the anode current collector may include, for example, a base film and a metal layer arranged on one side or both (e.g., opposite) sides of the base film. The base film may include, for example, a polymer. The polymer may be, for example, a thermoplastic polymer. The polymer may include, for example, PET, PE, PP, PBT, PI, or a combination thereof. The polymer may be an insulating polymer. The base film may include an insulating thermoplastic polymer, and thus, if (e.g., when) a short circuit occurs, the base film may soften or liquefy to interrupt the operation of a battery, thereby suppressing a rapid increase in current. The metal layer may include, for example, copper (Cu), stainless steel, titanium (Ti), iron (Fe), cobalt (Co), nickel (Ni), or an alloy thereof. For example, the metal layer may correspond to a first metal substrate. The metal layer may additionally include a coating layer containing a second metal. The anode current collector may additionally include a metal chip and/or a lead tab. The base film, metal layer, metal chip, and lead tab of the anode current collector may be defined as for the cathode current collector. The anode current collector may have such a structure, and thus a weight of the anode may be reduced, thereby improving the energy density of the anode and a lithium battery.

An anode active material layer may be formed (or provided) on the anode current collector. The anode active material layer may be formed (or provided) as a plated lithium layer after being charged. In some embodiments, the anode active material layer may be formed (or provided) by utilizing an anode active material during the assembly of a battery.

In a method of forming (or providing) an anode active material layer by utilizing an anode active material, the anode active material layer may be prepared in substantially the same manner as a cathode active material layer, except that the anode active material is utilized instead of a cathode active material during the forming (or providing) of the cathode active material layer.

The lithium metal battery may further include, for example, a thin film, which contains an element capable of forming (or providing) an alloy together with lithium, on one side of the anode current collector. The thin film may be arranged between the anode current collector and the anode active material layer. The thin film may include, for example, an element capable of forming (or providing) an alloy together with lithium. Examples of the element capable of forming (or providing) an alloy together with lithium may include gold, silver, zinc, tin, indium, silicon, aluminum, bismuth, and/or the like, but one or more embodiments are not necessarily limited thereto. Any material may be utilized as long as the material may form (or provide) an alloy together with lithium in the art. The thin film may include (e.g., consist of) one of such metals or an alloy of one or more suitable types (kinds) of metals. Due to the thin film being arranged on one side of the anode current collector, for example, the precipitated form of a first anode active material layer precipitated between the thin film and the anode active material layer may be further planarized, and the cycle characteristics of the lithium metal battery may be further improved.

### Separator

A separator may be further arranged between the cathode and the anode.

Any separator may be utilized as the separator as long as the separator is commonly utilized in a lithium metal battery.

The separator may be provided as a single film of PE, PP, or PVDF, a multi-film of at least two layers thereof, or a mixed multi-film such as a two-layer separator of PE/PP, a three-layer separator of PE/PP/PE, or three-layer separator of PP/PE/PP.

The separator may include a porous substrate and a coating layer including an organic material, an inorganic material, or a combination thereof positioned on a side (e.g., one side or both (e.g., opposite) sides) of the porous substrate.

The porous substrate may be a polymer film formed of any one polymer of (e.g., selected from among) polyolefin such as PE or PP, polyester such as PET or PBT, polyamide, PI, polycarbonate, polyether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and/or PTFE, or a copolymer or mixture of two or more types (kinds) thereof.

The organic material may include a PVDF-based polymer or a (meth)acrylic-based polymer.

The inorganic material may include inorganic particles of (e.g., selected from among) Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or one or more combinations thereof, but one or more embodiments are not limited thereto.

The organic material and the inorganic material may be mixed and present in one coating layer or may be present in a form (in which a coating layer including an organic material and a coating layer including an inorganic material are stacked).

The lithium metal battery according to some embodiments may further include a solid electrolyte. The solid electrolyte may be, for example, an oxide-based solid electrolyte, a sulfide-based solid electrolyte, or a combination thereof.

### Lithium metal battery

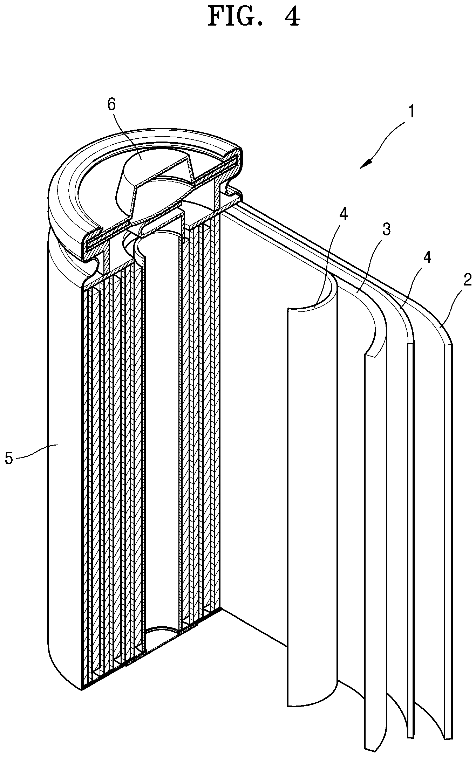

Referring to FIG. 4, a lithium metal battery 1 according to some embodiments may include a cathode 3, an anode 2 described above, and a separator 4. A gel polymer electrolyte may be arranged between an electrolyte and the cathode 3. The cathode 3, the anode 2, and the separator 4 may be wound or folded to form (or provide) a battery structure. The formed battery structure may be accommodated in a battery case 5. An organic electrolyte may be injected into the battery case 5, and the battery case 5 may be sealed with a cap assembly 6 to complete the lithium metal battery 1. The battery case 5 may have a cylindrical shape, but one or more embodiments are not necessarily limited to such a shape. For example, the battery case 5 may have a prismatic shape, a thin film shape, and/or the like.

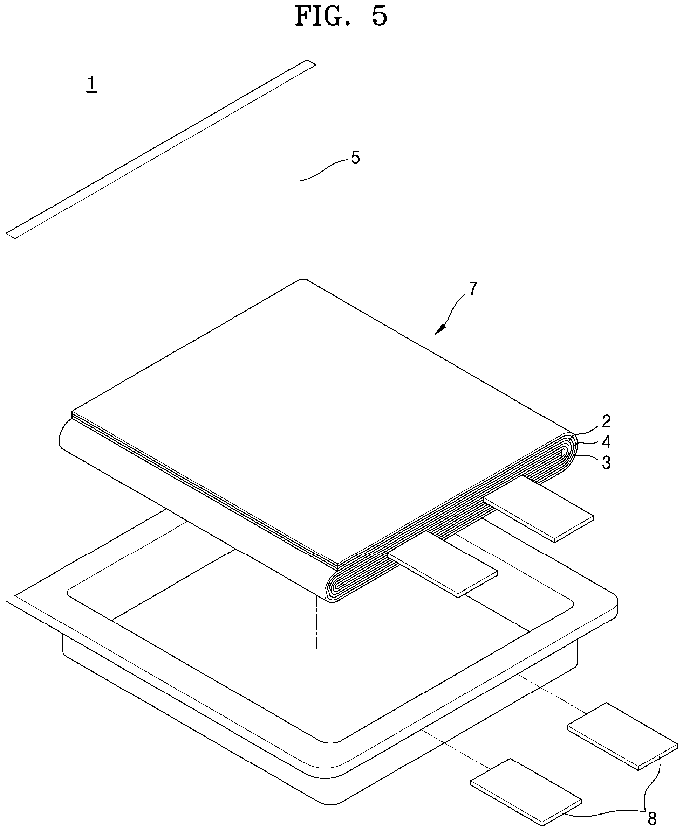

Referring to FIG. 5, a lithium metal battery 1 according to some embodiments may include a cathode 3, an anode 2, and a separator 4. The separator 4 may be arranged between the cathode 3 and the anode 2, and the cathode 3, the anode 2, and the separator 4 may be wound or folded to form (or provide) a battery structure 7. The formed battery structure 7 may be accommodated in a battery case 5. The lithium metal battery 1 may include an electrode tab 8 serving as an electrical path for guiding a current generated in the battery structure 7 to the outside. An organic electrolyte may be injected into a battery case 5, and the battery case 5 may be sealed to complete the lithium metal battery 1. The battery case 5 may have a prismatic shape, but one or more embodiments are not necessarily limited to such a shape. For example, the battery case 5 may have a cylindrical shape, a thin film shape, and/or the like.

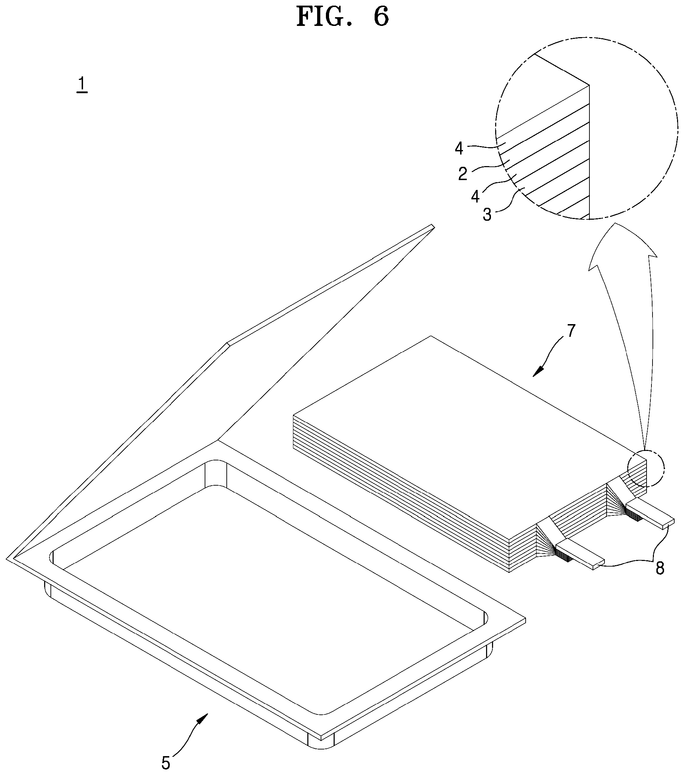

Referring to FIG. 6, a lithium metal battery 1 according to some embodiments may include a cathode 3, an anode 2 according to some embodiments, and a separator 4. The separator 4 may be arranged between the cathode 3 and the anode 2 to form (or provide) a battery structure 7. A gel polymer electrolyte may be between the separator 4 and the cathode 3. The battery structure 7 may be stacked in a bi-cell structure and then accommodated in a battery case 5. The lithium metal battery 1 may include an electrode tab 8 serving as an electrical path for guiding a current generated in the battery structure 7 to the outside. An organic electrolyte may be injected into the battery case 5, and the battery case 5 may be sealed to complete the lithium metal battery 1. The battery case 5 may have a prismatic shape, but one or more embodiments are not necessarily limited to such a shape. For example, the battery case 5 may have a cylindrical shape, a thin film shape, and/or the like.

A pouch-type or kind lithium metal battery may correspond to a case in which a pouch is utilized as a battery case in each of the lithium metal batteries of FIGS. 5 and 6. The pouch-type or kind lithium metal battery may include one or more battery structures. An electrolyte or an electrolyte and a separator may be arranged between a cathode and an anode to form (or provide) the battery structure. After the battery structure is stacked in a bi-cell structure, the battery structure may be impregnated in a liquid electrolyte, accommodated in a pouch, and sealed to complete the pouch-type or kind lithium metal battery. For example, the above-described cathode, anode, and separator may be simply stacked and accommodated in a pouch in the form of an electrode assembly or may be wound or folded into a jelly roll-shaped electrode assembly and then accommodated in a pouch. Subsequently, an organic electrolyte may be injected into the pouch, and the pouch may be sealed to complete a lithium metal battery.

The lithium metal battery of the present disclosure may have excellent or suitable discharge capacity and lifespan characteristics and high energy density and thus may be utilized, for example, in electric vehicles (EVs). For example, the lithium battery may be utilized in hybrid vehicles such as plug-in hybrid electric vehicles (PHEVs). In some embodiments, the lithium battery may be utilized in fields in which large amounts of power are required to be stored. For example, the lithium metal battery may be utilized in electric bicycles, power tools, and/or the like.

A plurality of lithium metal batteries may be stacked to form (or provide) a battery module, and a plurality of battery modules may form (or provide) a battery pack. The battery pack may be utilized in all devices requiring high capacity and high output power. For example, the battery pack may be utilized in laptops, smartphones, electric vehicles, and/or the like. A battery module may include, for example, a plurality of batteries and a frame for holding the plurality of batteries. A battery pack may include, for example, a plurality of battery modules and a busbar for connecting the plurality of battery modules. The battery module and/or the battery pack may further include a cooling device. A plurality of battery packs may be adjusted by a battery management system. The battery management system may include a battery pack and a battery controller connected to the battery pack.

### Method of manufacturing lithium metal battery

A lithium metal battery according to some embodiments may be manufactured a method including preparing an anode current collector, forming (or providing) a protective film including BN and a binder on the anode current collector, preparing a separator, preparing a cathode, stacking the anode current collector, the separator, and the cathode to prepare a battery assembly, injecting a gel polymer electrolyte-forming composition including a gel polymer-forming crosslinkable monomer, a liquid electrolyte, BN, and a nitrile-based compound into the battery assembly, and performing heat treatment to form (or provide) a gel polymer electrolyte.

The forming (or providing) of the protective film including BN and the binder on the anode current collector may be performed by coating the anode current collector with a protective film-forming composition including BN and at least one of (e.g., selected from among) a binder precursor and/or a binder and performing heat treatment. For example, the binder precursor may include, for example, a first polymer and a second polymer, and the binder may refer to the binder described in the above-described protective film.

A solvent such as NMP or dimethylformamide may be added to the protective film-forming composition. A content (e.g., amount) of the solvent may be in a range of about 0.05 parts by weight to about 5 parts by weight with respect to 100 parts by weight of the total weight of BN and the binder.

The protective film may further include a lithium salt. A content (e.g., amount) of the lithium salt may be in a range of about 30 parts by weight to about 80 parts by weight, about 40 parts by weight to about 60 parts by weight, or about 45 parts by weight to about 55 parts by weight with respect to 100 parts by weight of the total weight of the binder and the lithium salt.

In the lithium metal battery according to some embodiments, the separator containing a gel polymer electrolyte may be formed (or provided) in situ by injecting a gel polymer electrolyte-forming composition into a battery assembly and performing heat treatment as described above. In some embodiments, the lithium metal battery may also be manufactured by separately preparing a separator containing a gel polymer electrolyte to form (or provide) a self-standing film, arranging the self-standing film on an anode electrode current collector, and arranging a cathode on the self-standing film.

The protective film-forming composition may further include a first polymer containing a hydroxyl group and a second polymer having a crosslinkable functional group. The protective film formed (or provided) of the protective film-forming composition may further include a crosslinked polymer of the first polymer and the second polymer. For example, a mixing weight ratio of the first polymer containing the hydroxyl group to the second polymer may be adjusted to be in a range of about 50:50 to about 99:1, about 50:50 to about 99:1, or about 60:40 to about 90:10.

The second polymer may include at least one of (e.g., selected from among) fluorinated polyamic acid and/or fluorinated polyimide which have a carboxyl group.

If (e.g., when) the second polymer includes the fluorinated polyamic acid having the carboxyl group, the protective film-forming composition which contains the second polymer may be applied onto the anode current collector and dried, and then heat treatment may be further performed to perform a crosslinking reaction between the first polymer and the second polymer, thereby forming (or providing) the protective film containing the crosslinked polymer. The heat treatment varies according to a composition of the first polymer and the second polymer, but may be performed, for example, at a temperature of about 80 °C to about 200 °C, about 100 °C to about 200 °C, about 150 °C to about 200 °C, or about 150 °C to about 190 °C. If (e.g., when) a heat treatment temperature is in such a range, the protective film formed on an electrode surface may minimize or reduce an electrolyte from being exposed at the electrode surface and may form (or provide) a substantially uniform flow of lithium ions throughout an electrode, thereby effectively suppressing the growth of lithium dendrites.

The protective film-forming composition may further include a lithium salt.

The lithium metal battery may further include a separator. The separator may further include a liquid electrolyte and/or a gel polymer electrolyte.

The present disclosure will be described in more detail through the following Examples and Comparative Examples. However, Examples are for illustrative purposes only, and the scope of the present disclosure is not limited by Examples.

### Preparation Example 1: Preparation of polymer solution containing polyvinyl alcohol (PVA) and fluorinated polyamic acid of Formula 15

PVA was purchased from Sigma-Aldrich Co. LLC. A synthesis process of fluorinated polyamic acid of Formula 10 is as follows.

First, a round bottom flask was filled with nitrogen, about 4.9411 g (about 0.00154 mol) of 2,2'-bis(trifluoromethyl)benzidine (TFDB) and about 0.7825 g (about 0.00051 mol) of diaminobenzoic acid (DABA) were added, and then about 131 g of NMP was added and completely dissolved by utilizing a mechanical stirrer. Next, about 9.2764 g (about 0.0209 mol) of 4,4'-(hexafluoroisopropylidene) (6FDA) was added and stirred at room temperature (about 25 °C) for about 24 hours to prepare polyamic acid represented by Formula 9. The polyamic acid is a random copolymer. A molar ratio of 6FDA:TFDB:DABA was about 4:3:1.

In Formula 14, a molar ratio of n:m was about 1:3.

About 10 g of 0.5 equivalent LiOH aqueous solution at a carboxylic acid equivalent ratio was added to the polyamic acid (6FDA:TFDB:DABA, acid equivalent 210 g/eq) represented by Formula 14 to prepare water-soluble polyamic acid represented by Formula 10 in which 0.5 equivalent of COOH in COOH of the polyamic acid was substituted with COO-Li+.

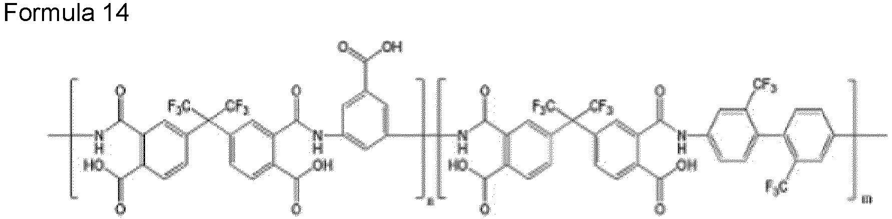

In Formula 14, n is 0.25, and m is 0.75.

The water-soluble polyamic acid represented by Formula 10 and PVA (weight average molecular weight (Mw)= about 89,000, hydrolysis+99 %) were mixed at a weight ratio of about 20:80 to prepare a polymer solution with a solid content (e.g., amount) of about 10 wt%.

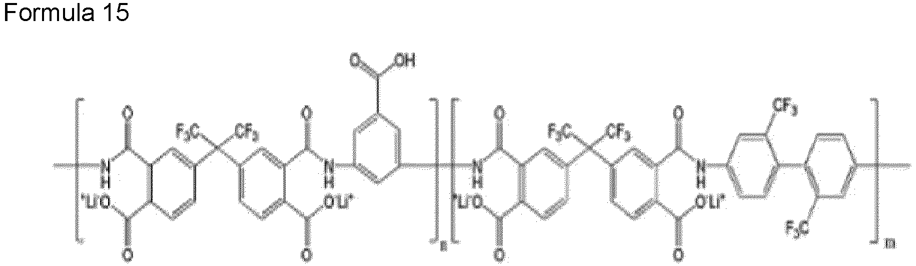

In Formula 15, n is 0.25, and m is 0.75.

### Preparation Example 2: Preparation of compound DRIC of Formula 1-1

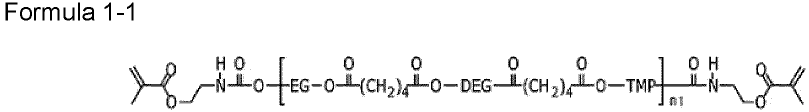

In Formula 1-1, EG denotes an ethylene glycol residue, DEG denotes a diethylene glycol residue, TMP denotes a trimethylolpropane residue, and n1 is 10.

About 150.6 g of adipic acid (AA), about 115.14 g of diethylene glycol (DG), about 81.05 g of ethylene glycol (EG), and about 21.32 g of trimethylolpropane (TMP) were put into a reactor at room temperature (about 25 °C), and a temperature was raised to about 220 °C. Titanium isopropoxide (TIP) was put into the reactor. After reaching full vacuum, such a mixture was subjected to a primary reaction at a temperature of about 220 °C for about 10 hours to obtain polyester polyol. The polyester polyol was primarily cooled to a temperature of about 130 °C, vacuum-treated at a temperature of about 130 °C for about 2 hours, and then secondarily cooled to a temperature of about 75 °C. About 18.24 g of isocyanato ethyl methacrylate (ICEMA), about 0.54 g of monomethyl ether hydroquinone (MEHQ), about 0.566 g of butylated hydroxy toluene (BHT), and about 0.526 g of dibutyl-tin-dilaulate (DBTDL) were added to the polyester polyol (Polyol) and subjected to a secondary reaction to obtain the compound DRIC of Formual 1-1.

### Example 1: Anode current collector/protective film (PVA/PI-F+BN+lithium salt=50:0.5:50)/separator+GPE (gel polymer+BN+SN+LE) (BN=0.1 %)/cathode

The polymer solution with a solid content (e.g., amount) of about 10 wt%, which was obtained by mixing the water-soluble polyamic acid represented by Formula 15 and PVA at a weight ratio of about 20:80 according to Preparation Example 1, hexagonal BN (average particle diameter: about 100 nm, spherical particles), and LiPF₆ as a lithium salt were mixed, and NMP as a solvent was mixed therewith to prepare a protective film-forming composition. For example, contents of a polymer of the polymer solution, BN, and the lithium salt were adjusted such that a mixing weight ratio of (PVA/PI-F):BN:lithium salt in a protective film was about 50:0.5:50. Here, PVA/PI-F refers to a crosslinked polymer of polyimide (PI) Formula 17 and polyvinyl alcohol (PVA), which will be described herein. A content (e.g., amount) of the solvent was about 900 parts by weight with respect to about 100 parts by weight of the polymer.

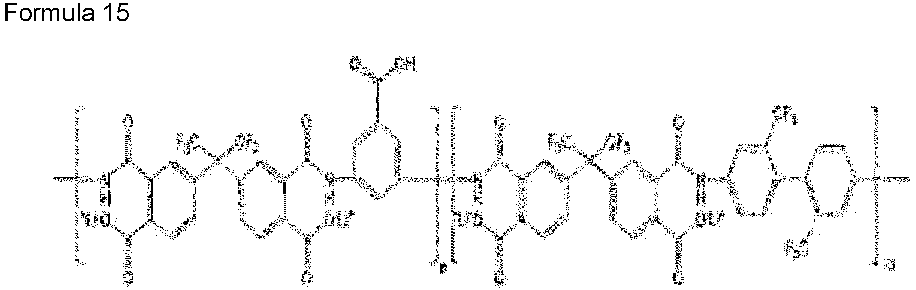

In Formula 15, n is 0.25, and m is 0.75.

The protective film-forming composition was applied onto an about 10 µm thick copper foil, which was an anode current collector, dried in a vacuum oven at a temperature of about 80 °C for about 30 minutes, and heat-treated at a temperature of about 180 °C for about 30 minutes to prepare an anode. The anode had a structure in which an about 3 µm thick protective film was applied onto a lithium metal thin film arranged on a copper current collector.

Through the heat treatment, a carboxyl group of the polyamic acid of Formula 15 reacted with a hydroxyl group of PVA to form (or provide) an ester linker, thereby forming (or providing) a crosslinked polymer (PVA/PIF) of PI of Formula 17 and PVA. The crosslinked polymer had a three-dimensional network structure in which the PI of Formula 17 and PVA were crosslinked at a plurality of points.

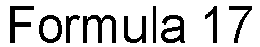

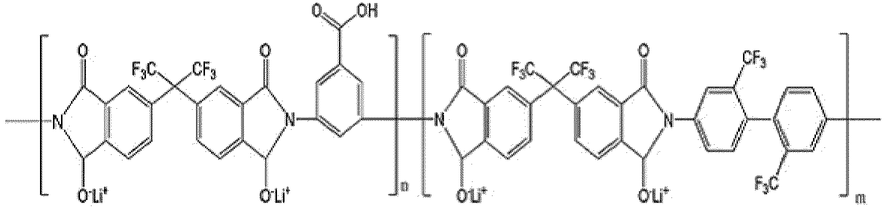

In Formula 17, n is 0.25, m is 0.75, and a weight average molecular weight of the PI of Formula 17 is about 2,000,000.

An about 20 µm thick PE single film was stacked as a separator, and a cathode was stacked on the other side (e.g., opposite side) of the separator to prepare a stack. A gel polymer electrolyte-forming composition was injected into the prepared stack and heat-treated at a temperature of about 70 °C for about 120 minutes to manufacture a lithium metal battery in which a gel polymer electrolyte was formed in pores of the separator. The lithium metal battery had a cathode/gel polymer electrolyte (separator)/protective film/anode current collector structure. A content (e.g., amount) of BN in the gel polymer electrolyte is about 0.1 parts by weight with respect to about 100 parts by weight of the gel polymer electrolyte.

The gel polymer electrolyte-forming composition was prepared by mixing dipentaerythritol hexaacrylate (DPHA) as a six-functional crosslinking agent that was a crosslinkable monomer, hexagonal BN (average particle diameter: about 0.1 µm (about 100 nm), spherical particles), a liquid electrolyte, succinonitrile (SN), and about 240.30 g/mol of benzoin ethyl ether (manufactured by Sigma-Aldrich Co. LLC) as an initiator. A mixture, which was obtained by adding about 0.6 M LiBF₄ and about 0.6 M LiDFOB (lithium difluoro(oxalate)borate) to a mixed solvent of DEC and FEC having a volume ratio of about 2:1, was utilized as the liquid electrolyte.

With respect to about 100 parts by weight of the total weight of the gel polymer electrolyte-forming composition, a content (e.g., amount) of DPHA as the crosslinkable monomer was about 4 parts by weight, and a content (e.g., amount) of BN was about 0.1 parts by weight. A content (e.g., amount) of the initiator was about 5 parts by weight with respect to about 100 parts by weight of the crosslinkable monomer. A content (e.g., amount) of SN was about 0.1 parts by weight with respect to about 100 parts by weight of the total weight of the gel polymer electrolyte-forming composition.

The cathode was prepared according to the following method.

A Li_{1.04}Ni_{0.88}Co_{0.1}Al_{0.02}O₂ powder and a carbon conductive material (Super-P manufactured by Timcal Ltd.) were uniformly (substantially uniformly) mixed at a weight ratio of about 90:5, a PVDF binder solution was added thereto to prepare a cathode active material slurry such that a weight ratio of active material: carbon-based conductive material: binder was about 90:5:5.

The prepared slurry was applied onto an about 15 µm thick aluminum substrate by utilizing a doctor blade, dried under reduced pressure at a temperature of about 120 °C, and then rolled by utilizing a roll press to prepare a cathode having a form of a sheet.

A lithium metal battery manufactured according to such a process had a structure in which a plated lithium layer was formed between the anode current collector and the separator after charging or discharging.

### Example 2: Anode current collector/protective film (PVA/PI-F+BN+lithium salt=50:0.5:50)/separator+GPE (gel polymer+BN+SN+LE) (BN=1%)/cathode

A gel polymer electrolyte and a lithium metal battery including the same were manufactured in substantially the same manner as in Example 1, except that, during preparation of the gel polymer electrolyte, a content (e.g., amount) of BN in a gel polymer electrolyte-forming composition was changed from about 0.1 parts by weight to about 1 part by weight such that the content (e.g., amount) of BN was about 0.1 parts by weight with respect to about 100 parts by weight of the total weight of the gel polymer electrolyte.

### Example 3: Anode current collector/protective film (PVA/PI-F+BN+lithium salt=50:0.5:50)/separator+GPE (gel polymer+BN+SN+LE) (BN=0.1%)/cathode

A gel polymer electrolyte and a lithium metal battery including the same were manufactured in substantially the same manner as in Example 1, except that, during preparation of the gel polymer electrolyte, trimethylolpropane trimethacrylate (TMPTMA) was utilized as a crosslinkable monomer instead of DPHA.

### Example 4: Anode current collector/protective film (PVA/PI-F+BN+lithium salt=50:0.5:50)/separator+GPE (gel polymer+BN+SN+LE) (BN=0.01 %) (change in size of BN unlike Example 1) /cathode

A gel polymer electrolyte and a lithium metal battery were manufactured in substantially the same manner as in Example 1, except that an average particle diameter of BN was changed from about 0.1 µm (about 100 nm) to about 1 µm.

### Example 5: Anode current collector/protective film (PVA/PI-F+BN+lithium salt=50:0.5:50)/separator+GPE (gel polymer+BN+SN+EL) (BN=0.1%)/cathode

A gel polymer electrolyte and a lithium metal battery were manufactured in substantially the same manner as in Example 1, except that a content (e.g., amount) of SN in a gel polymer electrolyte-forming composition was changed to about 1 wt%.

### Example 6:

A gel polymer electrolyte and a lithium metal battery were manufactured in substantially the same manner as in Example 1, except that fibrous BN with an average fiber length of about 60 µm was utilized as BN in a protective film and the gel polymer electrolyte. The fibrous BN was utilized by being prepared according to a manufacturing method disclosed in Korean Patent Publication 2000-0029823, the entire content of which is incorporated herein by reference.

### Comparative Example 1:BN-free (anode current collector/protective film (PVA/PI-F+lithium salt=50:0.5:50)/separator+GPE (gel polymer+SN+LE)/cathode)

A gel polymer electrolyte and a lithium metal battery were manufactured in substantially the same manner as in Example 1, except that BN was not utilized during preparation of a protective film and the gel polymer electrolyte.

### Comparative Example 2: SN-free(anode current collector/protective film (PVA/PI-F+BN+lithium salt=50:0.5:50)/separator+GPE (gel polymer+BN+LE) (BN=0.01%)/cathode

A gel polymer electrolyte and a lithium metal battery were manufactured in substantially the same manner as in Example 1, except that SN was not utilized during preparation of a gel polymer electrolyte-forming composition.

### Comparative Example 3: Anode current collector/protective film (PVA/PI-F+lithium salt=50:0.5:50)/separator+GPE (gel polymer+BN+SN+LE)/cathode (BN=0.1 %)

A gel polymer electrolyte and a lithium metal battery were manufactured in substantially the same manner as in Example 1, except that BN was not utilized during preparation of a gel polymer electrolyte-forming composition.

### Evaluation Example 1: Room temperature (25 °C) lifespan

The charge/discharge characteristics of the lithium metal batteries of Examples 1 to 6 and Comparative Examples 1 to 3 were evaluated under the following conditions.

The lithium metal batteries were charged at a constant current rate of about 0.1 C at a temperature of about 25 °C until a voltage reached about 4.45 V (vs. Li), and then, in a constant voltage mode, while about 4.3 V was maintained, the charging was cut-off at a current rate of about 0.05 C. Subsequently, the lithium metal batteries were discharged at a constant current rate of about 0.1 C until the voltage reached about 3.6 V (vs. Li) during discharging (formation cycle).

The lithium metal batteries subjected to the formation cycle were charged at a constant current rate of about 0.2 C at a temperature of about 25 °C until the voltage reached about 4.3 V (vs. Li), and then, in a constant voltage mode, while about 4.3 V was maintained, the charging was cut-off at a current rate of about 0.05 C. Subsequently, the lithium metal batteries were discharged at a constant current rate of about 0.5 C until the voltage reached about 3.6 V (vs. Li) during discharging (1^{st} cycle). Such a cycle was repeated under the same conditions up to a 300^{th} cycle.

The lithium metal battery was rested for about 10 minutes after every charging/discharging cycle. Some of charge/discharge test results at room temperature are shown in Table 1 . The number of cycles refers to the number of cycles required for discharge capacity to decrease to about 80 % of standard capacity after a 2^{nd} second cycle. It was regarded that, as the number of cycles was increased, lifespan characteristics were improved.

**Table 1**

| Classification | Condition | Number of cycles (n) |
|---|---|---|
| Example 1 | Protective film (PVA/PI-F+BN+lithium salt=50:0.5:50)/separator+GPE (gel polymer+BN+SN+LE) BN content (e.g., amount) of 0.1 % in GPE average particle diameter of BN=0.1 µm (100 nm) in protective film and GPE | 174 |
| Example 2 | Change in BN content (e.g., amount) in GPE unlike Example 1, protective film (PVA/PI-F+BN+lithium salt=50:0.5:50)/separator+GPE (gel polymer+BN+SN+LE) BN content (e.g., amount) of 1 % in GPE average particle diameter of BN=0.1 µm (100 nm) in protective film and GPE | 158 |
| Example 3 | Change in type or kind of crosslinkable monomer in GPE unlike Example 1, protective film (PVA/PI-F+BN+lithium salt=50:0.5:50)/separator+GPE (gel polymer+BN+SN+LE) BN content (e.g., amount) of 0.1 % in GPE average particle diameter of BN=0.1 µm (100 nm) in protective film and GPE | 162 |
| Example 4 | Change in size of BN in protective film unlike Example 1, protective film (PVA/PI-F+BN+lithium salt=50:0.5:50)/separator+GPE (gel polymer+BN+SN+LE) average particle diameter of BN in protective film and GPE=1 µm | 155 |
| Example 5 | Change in BN content (e.g., amount) in protective film unlike Example 1, protective film (PVA/PI-F+BN+lithium salt=50:0.5:50)/separator+GPE (gel polymer+BN+SN+LE) BN content (e.g., amount) of 1% in protective film | 143 |
| Example 6 | Use of fibrous BN | 151 |
| Comparative Example 1 | BN-FREE in GPE, protective film (PVA/PI-F+lithium salt=50:0.5:50)/separator+GPE (gel polymer+SN+EL) | 87 |
| Comparative Example 2 | SN-FREE in GPE, protective film (PVA/PI-F+BN+lithium salt=50:0.5:50)/separator+GPE (gel polymer+BN+EL) | 111 |
| Comparative Example 3 | BN-FREE in protective film protective film (PVA/PI-F+lithium salt=50:0.5:50)/separator+GPE(gel polymer+BN+SN+EL) | 126 |

As shown in Table 1, the lifespan characteristics of the lithium metal battery of Comparative Example 1 were deteriorated due to side reactions between lithium and an electrolyte due to the growth of dendrites caused by the absence of BN in the protective film, and the lifespan characteristics of the lithium metal battery of Comparative Example 2 were not sufficient because an effect of increasing ionic conductivity was not sufficient due to the absence of SN contained in GPE. The lithium metal battery of Comparative Example 3 did not have sufficient mechanical properties because the protective film did not contain BN. In each of the lithium metal batteries of Comparative Examples 1 to 3, the protective film did not have a sufficient effect of suppressing the growth of anode dendrites, and thus, as compared with Examples 1 to 5, if (e.g., when) the protective film was formed (or provided) on the anode current collector, without a decrease in ionic conductivity, the physical properties of the protective film was increased, resulting in the deterioration of the capacity retention characteristics of the lithium metal batteries.

In contrast, in each of the lithium metal batteries of Examples 1 to 3, BN was added to the gel polymer electrolyte contained in the separator and the protective film to increase ionic conductivity and improve physical properties, thereby improving lifespan characteristics as compared with the lithium metal batteries of Comparative Examples 1 to 3. In the lithium metal battery of Example 4, as compared with the lithium metal battery of Example 1, if (e.g., when) the size of BN contained in the gel polymer electrolyte and the protective film increases, dispersibility of BN is reduced, and a specific surface decreases to reduce an effect of increasing a lifespan. In the lithium metal battery of Example 5, a content (e.g., amount) of BN was increased in the protective film to increase a dendrite suppression effect, thereby increasing lifespan characteristics as compared with Example 1.

### Evaluation Example 2: High temperature (45 °C) lifespan

The charge/discharge characteristics of the lithium metal batteries of Examples 1 to 6 and Comparative Examples 1 to 3 were evaluated under the following conditions.

The lithium metal batteries were charged at a constant current rate of about 0.1 C at a temperature of about 45 °C until a voltage reached about 4.45 V (vs. Li), and then, in a constant voltage mode, while about 4.3 V was maintained, the charging was cut-off at a current rate of about 0.05 C. Subsequently, the lithium metal batteries were discharged at a constant current rate of about 0.1 C until the voltage reached about 3.6 V (vs. Li) during discharging (formation cycle).

The lithium metal batteries subjected to the formation cycle were charged at a constant current rate of about 0.2 C at a temperature of about 45 °C until the voltage reached about 4.3 V (vs. Li), and then, in a constant voltage mode, while about 4.3 V was maintained, the charging was cut-off at a current rate of about 0.05 C. Subsequently, the lithium metal batteries were discharged at a constant current rate of about 0.5 C until the voltage reached about 3.6 V (vs. Li) during discharging (1^{st} cycle). Such a cycle was repeated under the same conditions up to a 160^{th} cycle.

The lithium battery was rested for about 10 minutes after every charging/discharging cycle. Some of charging/discharging test results at high temperature are shown in Table 2.

**Table 2**

| Classification | Condition | Number of cycles (n) |
|---|---|---|
| Example 1 | Protective film (PVA/PI-F+BN+lithium salt=50:0.5:50)/separator+GPE (gel polymer+BN+SN+LE) BN content (e.g., amount) of 0.1 % in GPE average particle diameter of BN=0.1 µm (100 nm) in protective film and GPE | 135 |
| Example 2 | Change in BN content (e.g., amount) in GPE unlike Example 1, protective film (PVA/PI-F+BN+lithium salt=50:0.5:50)/separator+GPE (gel polymer+BN+SN+LE) BN content (e.g., amount) of 1 % in GPE average particle diameter of BN=0.1 µm (100 nm) in protective film and GPE | 111 |
| Example 3 | Change in type or kind of crosslinkable monomer in GPE unlike Example 1, protective film (PVA/PI-F+BN+lithium salt=50:0.5:50)/separator+GPE (gel polymer+BN+SN+LE) BN content (e.g., amount) of 0.1 % in GPE average particle diameter of BN=0.1 µm (100 nm) in protective film and GPE | 135 |
| Example 4 | Change in size of BN in protective film unlike Example 1, protective film (PVA/PI-F+BN+lithium salt=50:0.5:50)/separator+GPE (gel polymer+BN+SN+LE) average particle diameter of BN=1 µm in protective film and GPE | 108 |
| Example 5 | Change in BN content (e.g., amount) in protective film unlike Example 1, protective film (PVA/PI-F+BN+lithium salt=50:0.5:50)/separator+GPE (gel polymer+BN+SN+LE) BN content (e.g., amount) of 1% in protective film | 107 |
| Example 6 | Use of fibrous BN | 125 |
| Comparative Example 1 | BN-FREE in GPE, protective film (PVA/PI-F+lithium salt=50:0.5:50)/separator+GPE (gel polymer+SN+EL) | 52 |
| Comparative Example 2 | SN-FREE in GPE, protective film (PVA/PI-F+BN+lithium salt=50:0.5:50)/separator+GPE (gel polymer+BN+EL) | 77 |
| Comparative Example 3 | BN-FREE in protective film protective film (PVA/PI-F+lithium salt=50:0.5:50)/separator+GPE(gel polymer+BN+SN+EL) | 79 |

Referring to Table 2, it could be seen that the lithium metal batteries of Examples 1 to 6 had considerably improved high-temperature lifespan characteristics as compared with to the lithium metal batteries of Comparative Examples 1 to 3.

### Evaluation Example 3: Thickness expansion ratio of anode

The charge/discharge characteristics of the lithium metal batteries of Examples 1 to 6 and Comparative Examples 1 to 3 were evaluated under the following conditions, and a thickness expansion ratio of the anode was examined.

The lithium metal batteries were charged at a constant current rate of about 0.1 C at a temperature of about 25 °C until a voltage reached about 4.45 V (vs. Li), and then, in a constant voltage mode, while about 4.3 V was maintained, the charging was cut-off at a current rate of about 0.05 C. Subsequently, the lithium metal batteries were discharged at a constant current rate of about 0.1 C until the voltage reached about 3.6 V (vs. Li) during discharging (formation cycle).

The lithium metal batteries subjected to the formation cycle were charged at a constant current rate of about 0.2 C at a temperature of about 25 °C until the voltage reached about 4.3 V (vs. Li), and then, in a constant voltage mode, while about 4.3 V was maintained, the charging was cut-off at a current rate of about 0.05 C. Subsequently, the lithium metal batteries were discharged at a constant current rate of about 0.5 C until the voltage reached about 3.6 V (vs. Li) during discharging (1^{st} cycle). Such a cycle was repeated under the same conditions up to a 100^{th} cycle.

The lithium battery was rested for about 10 minutes after every charging/discharging cycle. Some of charge/discharge test results at room temperature are shown in Table 1. thickness expansion ratio (%) of anode = [thickness of plated lithium layer formed on anode current collector after charging of 100 cycles / thickness of plated lithium layer formed on anode current collector after formation] × 100

**Table 3**

| Classification | Condition | Thickness expansion ratio (%) of anode |
|---|---|---|
| Example 1 | Protective film (PVA/PI-F+BN+lithium salt=50:0.5:50)/separator+GPE (gel polymer+BN+SN+LE) BN content (e.g., amount) of 0.1 % in GPE average particle diameter of BN=0.1 µm (100 nm) in protective film and GPE | 111 |
| Example 2 | Change in BN content (e.g., amount) in GPE unlike Example 1, protective film (PVA/PI-F+BN+lithium salt=50:0.5:50)/separator+GPE (gel polymer+BN+SN+LE) BN content (e.g., amount) of 1 % in GPE average particle diameter of BN=0.1 µm (100 nm) in protective film and GPE | 115 |
| Example 3 | Change in type or kind of crosslinkable monomer in GPE unlike Example 1, protective film (PVA/PI-F+BN+lithium salt=50:0.5:50)/separator+GPE (gel polymer+BN+SN+LE) BN content (e.g., amount) of 0.1 % in GPE average particle diameter of BN=0.1 µm (100 nm) in protective film and GPE | 121 |
| Example 4 | Change in size of BN in protective film unlike Example 1, protective film (PVA/PI-F+BN+lithium salt=50:0.5:50)/separator+GPE (gel polymer+BN+SN+LE) average particle diameter of BN=1 µm in protective film and GPE | 125 |
| Example 5 | Change in BN content (e.g., amount) in protective film unlike Example 1, protective film (PVA/PI-F+BN+lithium salt=50:0.5:50)/separator+GPE (gel polymer+BN+SN+LE) BN content (e.g., amount) of 1% in protective film | 136 |
| Example 6 | Use of fibrous BN | 127 |
| Comparative Example 1 | BN-FREE in GPE, protective film (PVA/PI-F+lithium salt=50:0.5:50)/separator+GPE (gel polymer+SN+EL) | 205 |
| Comparative Example 2 | SN-FREE in GPE, protective film (PVA/PI-F+BN+lithium salt=50:0.5:50)/separator+GPE (gel polymer+BN+EL) | 198 |
| Comparative Example 3 | BN-FREE in protective film protective film (PVA/PI-F+lithium salt=50:0.5:50)/separator+GPE(gel polymer+BN+SN+EL) | 192 |

As could be seen in Table 3, unlike the lithium metal batteries of Comparative Examples 1 to 3, in the lithium metal batteries of Examples 1 to 6, a thickness expansion ratio of the anode was improved to be about 150 % or less.

### Evaluation Example 4: Ion conductivity

The ionic conductivity of the protective film in each of the lithium metal batteries of Examples 1 to 6 and Comparative Examples 1 to 3 was examined and shown in Table 4 . The ion conductivity was measured by applying a voltage bias of about 10 mV to the protective film in a frequency range of about 1 Hz to about 1 MHz, scanning a temperature, and measuring resistance.

**Table 4**

| Classification | Condition | Ion conductivity (mS/cm) |
|---|---|---|
| Example 1 | Protective film (PVA/PI-F+BN+lithium salt=50:0.5:50)/separator+GPE (gel polymer+BN+SN+LE) BN content (e.g., amount) of 0.1 % in GPE average particle diameter of BN=0.1 µm (100 nm) in protective film and GPE | 0.47 |
| Example 2 | Change in BN content (e.g., amount) in GPE unlike Example 1, protective film (PVA/PI-F+BN+lithium salt=50:0.5:50)/separator+GPE (gel polymer+BN+SN+LE) BN content (e.g., amount) of 1 % in GPE average particle diameter of BN=0.1 µm (100 nm) in protective film and GPE | 0.41 |
| Example 3 | Change in type or kind of crosslinkable monomer in GPE unlike Example 1, protective film (PVA/PI-F+BN+lithium salt=50:0.5:50)/separator+GPE (gel polymer+BN+SN+LE) BN content (e.g., amount) of 0.1 % in GPE average particle diameter of BN=0.1 µm (100 nm) in protective film and GPE | 0.43 |
| Example 4 | Change in size of BN in protective film unlike Example 1, protective film (PVA/PI-F+BN+lithium salt=50:0.5:50)/separator+GPE (gel polymer+BN+SN+LE) average particle diameter of BN=1 µm in protective film and GPE | 0.42 |
| Example 5 | Change in BN content (e.g., amount) in protective film unlike Example 1, protective film (PVA/PI-F+BN+lithium salt=50:0.5:50)/separator+GPE (gel polymer+BN+SN+LE) BN content (e.g., amount) of 1% in protective film | 0.42 |
| Example 6 | Use of fibrous BN | 0.48 |
| Comparative Example 1 | BN-FREE in GPE, protective film (PVA/PI-F+lithium salt=50:0.5:50)/separator+GPE (gel polymer+SN+EL) | 0.32 |
| Comparative Example 2 | SN-FREE in GPE, protective film (PVA/PI-F+BN+lithium salt=50:0.5:50)/separator+GPE (gel polymer+BN+EL) | 0.33 |
| Comparative Example 3 | BN-FREE in protective film protective film (PVA/PI-F+lithium salt=50:0.5:50)/separator+GPE(gel polymer+BN+SN+EL) | 0.35 |

As shown in Table 4, it could be seen that the protective films of the lithium metal batteries of Examples 1 to 6 each had higher ionic conductivity than the lithium metal batteries of Comparative Examples 1 to 3.

### Evaluation Example 5: Mechanical property evaluation

In the lithium metal batteries of Examples 1 to 6 and Comparative Examples 1 to 3, the modulus, hardness, and recovery of the protective films were evaluated and measured by utilizing a microindenter (DUH-211 manufactured by SHIMADZU CORPORATION). A force applied to the protective film was about 10 mN.

Measurement results are shown in Table 5. Extension corresponds to a distance by which a tip moves inside a sample until a certain force is applied to the tip of the microindenter, and the recovery is a ratio of a distance, by which the tip moves toward a sample surface from a point at which the tip moves a maximum distance inside the sample to a point at which the force applied to the tip becomes zero, to a distance by which the tip moves inside the sample. The modulus is an indentation modulus, and the hardness is indentation hardness, which is calculated from the force applied to the tip from the sample according to a moving distance of the tip of the microindenter (e.g., micro-indenter).

**Table 5**

| Classification | Condition | Modulus (Mpa) | Hardness (N/mm²) | Recovery (%) |
|---|---|---|---|---|
| Example 1 | Protective film (PVA/PI-F+BN+lithium salt=50:0.5:50)/separator+GPE (gel polymer+BN+SN+LE) BN content (e.g., amount) of 0.1 % in GPE average particle diameter of BN=0.1 µm (100 nm) in protective film and GPE | 2,870 | 26.6 | 77.2 |
| Example 2 | Change in BN content (e.g., amount) in GPE unlike Example 1, protective film (PVA/PI-F+BN+lithium salt=50:0.5:50)/separator+GPE (gel polymer+BN+SN+LE) BN content (e.g., amount) of 1 % in GPE average particle diameter of BN=0.1 µm (100 nm) in protective film and GPE | 2,220 | 23.3 | 75.5 |
| Example 3 | Change in type or kind of crosslinkable monomer in GPE unlike Example 1, protective film (PVA/PI-F+BN+lithium salt=50:0.5:50)/separator+GPE (gel polymer+BN+SN+LE) BN content (e.g., amount) of 0.1 % in GPE average particle diameter of BN=0.1 µm (100 nm) in protective film and GPE | 2,940 | 27.1 | 69.3 |
| Example 4 | Change in size of BN in protective film unlike Example 1, protective film (PVA/PI-F+BN+lithium salt=50:0.5:50)/separator+GPE (gel polymer+BN+SN+LE) average particle diameter of BN=1 µm in protective film and GPE | 2,580 | 25.5 | 62.4 |
| Example 5 | Change in BN content (e.g., amount) in protective film unlike Example 1, protective film (PVA/PI-F+BN+lithium salt=50:0.5:50)/separator+GPE (gel polymer+BN+SN+LE) BN content (e.g., amount) of 1% in protective film | 2,870 | 27.3 | 75.1 |
| Example 6 | Use of fibrous BN | 3,150 | 35.1 | 83.1 |
| Comparative Example 1 | BN-FREE in GPE, protective film (PVA/PI-F+lithium salt=50:0.5:50)/separator+GPE (gel polymer+SN+EL) | 1,530 | 13.1 | 60.0 |
| Comparative Example 2 | SN-FREE in GPE, protective film (PVA/PI-F+BN+lithium salt=50:0.5:50)/separator+GPE (gel polymer+BN+EL) | 1,710 | 15.2 | 55.3 |
| Comparative Example 3 | BN-FREE in protective film protective film (PVA/PI-F+lithium salt=50:0.5:50)/separator+GPE(g el polymer+BN+SN+EL) | 2,090 | 21.1 | 62.1 |

As shown in Table 5, as compared with to the protective films of Comparative Examples 1 to 3, the modulus of each of the protective films of Examples 1 to 6 was increased, for example, an elastic coefficient thereof was increased to increase the strength of the binder, thereby suppressing the expansion of an electrode. Such improvement in modulus is determined to be due to the formation of a crosslinked polymer.

In comparison, the protective films of Comparative Examples 1 to 3 each had significantly low modulus, hardness, and strength.

### Evaluation Example 6: High-rate characteristics

The lithium metal batteries manufactured in Examples 1 to 6 and Comparative Examples 1 to 3 were charged at a constant current rate of about 0.1 C at a temperature of about 25 °C until a voltage reached about 4.3 V (vs. Li), and then, in a constant voltage mode, while about 4.3 V was maintained, the charging was cut off at a current rate of about 0.05 C. Subsequently, the lithium metal batteries were discharged at a constant current rate of about 0.1 C until the voltage reached about 3.6 V (vs. Li) during discharging (formation cycle).

The lithium metal batteries subjected to the formation cycle were charged at a constant current rate of about 0.2 C at a temperature of about 25 °C until the voltage reached about 4.3 V (vs. Li), and then, in a constant voltage mode, while about 4.3 V was maintained, the charging was cut-off at a current rate of about 0.05 C. Subsequently, the lithium metal batteries were discharged at a constant current rate of about 0.5 C until the voltage reached about 3.6 V (vs. Li) during discharging (1^{st} cycle).

The lithium metal batteries subjected to the1^{st} cycle were charged at a constant current rate of about 0.2 C at a temperature of about 25 °C until the voltage reached about 4.3 V (vs. Li), and then, in a constant voltage mode, while about 4.3 V was maintained, the charging was cut-off at a current rate of about 0.05 C. Next, the lithium metal batteries were discharged at a constant current rate of about 0.2 C until the voltage reached about 2.8 V (vs. Li) during discharging (2^{nd} cycle).

The 2^{nd} cycle was repeated under the same conditions up to a 7^{th} cycle.

The lithium metal batteries subjected to the 7^{th} cycle were charged at a constant current rate of about 0.33 C at a temperature of about 25 °C until the voltage reached about 4.35 V (vs. Li), and then, in a constant voltage mode, while about 4.35 V was maintained, the charging was cut-off at a current rate of about 0.05 C. Next, the lithium metal batteries were discharged at a constant current rate of about 0.5 C until the voltage reached about 2.8 V (vs. Li) during discharging (8^{rd} cycle).

The 8^{rd} cycle was repeated under the same conditions up to a 17^{th} cycle.

The lithium metal batteries subjected to the 17^{th} cycle were charged at a constant current rate of about 0.33 C at a temperature of about 25 °C until the voltage reached about 4.35 V (vs. Li), and then, in a constant voltage mode, while about 4.35 V was maintained, the charging was cut-off at a current rate of about 0.05 C. Next, the lithium metal batteries were discharged at a constant current rate of about 1 C until the voltage reached about 2.8 V (vs. Li) during discharging (18^{th} cycle).

The 18^{th} cycle was repeated under the same conditions up to a 25^{th} cycle.

The lithium metal batteries subjected to the 25^{th} cycle were charged at a constant current rate of about 0.33 C at a temperature of about 25 °C until the voltage reached about 4.35 V (vs. Li), and then, in a constant voltage mode, while about 4.35 V was maintained, the charging was cut-off at a current rate of about 0.05 C. Next, the lithium metal batteries were discharged at a constant current rate of about 2 C until the voltage reached about 2.8 V (vs. Li) during discharging (26^{th} cycle).

The 26^{th} cycle was repeated under the same conditions up to a 35^{th} cycle.

The lithium metal batteries subjected to the 35^{th} cycle were charged at a constant current rate of about 0.33 C at a temperature of about 25 °C until the voltage reached about 4.35 V (vs. Li), and then, in a constant voltage mode, while about 4.35 V was maintained, the charging was cut-off at a current rate of about 0.05 C. Next, the lithium metal batteries were discharged at a constant current rate of about 3 C until the voltage reached about 2.8 V (vs. Li) during discharging (36^{th} cycle).

The lithium metal batteries subjected to the 36^{th} cycle were charged at a constant current rate of about 0.33 C at a temperature of about 25 °C until the voltage reached about 4.35 V (vs. Li), and then, in a constant voltage mode, while about 4.35 V was maintained, the charging was cut-off at a current rate of about 0.05 C. Subsequently, the lithium metal batteries were discharged at a constant current rate of about 0.2 C until the voltage reached about 2.8 V (vs. Li) during discharging (46^{th} cycle). Such a cycle was repeated up to a 100^{th} cycle.

The lithium batteries were rested for about 10 minutes after every charging/discharging cycle.

Some of charge/discharge test results are shown in Table 6.

High-rate characteristics are defined by Equation 2. high-rate characteristics [%] = [discharge capacity at 25st cycle (1C rate)/discharge capacity at 2nd cycle (0.2 C rate)]×100

**Table 6**

| Classification | Condition | High-rate characteristics (%) |
|---|---|---|
| Example 1 | Protective film (PVA/PI-F+BN+lithium salt=50:0.5:50)/separator+GPE (gel polymer+BN+SN+LE) BN content (e.g., amount) of 0.1 % in GPE average particle diameter of BN=0.1 µm (100 nm) in protective film and GPE | 80 |
| Example 2 | Change in BN content (e.g., amount) in GPE unlike Example 1, protective film (PVA/PI-F+BN+lithium salt=50:0.5:50)/separator+GPE (gel polymer+BN+SN+LE) BN content (e.g., amount) of 1 % in GPE average particle diameter of BN=0.1 µm (100 nm) in protective film and GPE | 78 |
| Example 3 | Change in type or kind of crosslinkable monomer in GPE unlike Example 1, protective film (PVA/PI-F+BN+lithium salt=50:0.5:50)/separator+GPE (gel polymer+BN+SN+LE) BN content (e.g., amount) of 0.1 % in GPE average particle diameter of BN=0.1 µm (100 nm) in protective film and GPE | 76 |
| Example 4 | Change in size of BN in protective film unlike Example 1, protective film (PVA/PI-F+BN+lithium salt=50:0.5:50)/separator+GPE (gel polymer+BN+SN+LE) average particle diameter of BN=1 µm in protective film and GPE | 77 |
| Example 5 | Change in BN content (e.g., amount) in protective film unlike Example 1, protective film (PVA/PI-F+BN+lithium salt=50:0.5:50)/separator+GPE (gel polymer+BN+SN+LE) BN content (e.g., amount) of 1% in protective film | 75 |

| Example 6 | Use of fibrous BN | 79 |
|---|---|---|
| Comparative Example 1 | BN-FREE in GPE, protective film (PVA/PI-F+lithium salt=50:0.5:50)/separator+GPE (gel polymer+SN+EL) | 67 |
| Comparative Example 2 | SN-FREE in GPE, protective film (PVA/PI-F+BN+lithium salt=50:0.5:50)/separator+GPE (gel polymer+BN+EL) | 68 |
| Comparative Example 3 | BN-FREE in protective film protective film (PVA/PI-F+lithium salt=50:0.5:50)/separator+GPE(gel polymer+BN+SN+EL) | 72 |

Referring to Table 6, in each of the lithium metal batteries of Examples 1 to 6, the protective film formed on the anode current collector contained BN to improve lithium ion transfer and improve ionic conductivity characteristics. In one or more embodiments, the high-rate characteristics of the lithium metal batteries of Examples 1 to 6 were considerably increased as compared with the lithium metal battery of Comparative Example 1 including the separator which contained the gel polymer electrolyte not containing BN and the lithium metal battery including the separator which contained the gel polymer electrolyte not containing SN. In one or more embodiments, it could be seen that the physical strength of the protective film containing the gel polymer electrolyte of each of Examples 1 to 6 was increased to further increase stability and also improve ion conductivity so that the high-rate characteristics were improved.

While embodiments have been described in more detail with reference to the accompanying drawings, the present disclosure is not limited to the embodiments. It is obvious to those skilled in the art to which the present disclosure belongs that one or more suitable changes and modifications are conceivable within the scope of the technical idea described in the claims, and those are understood as naturally belonging to the technical scope of the present disclosure.

According to an aspect, BN may be added to a protective film and a gel polymer electrolyte to provide a lithium metal battery with improved ionic conductivity and physical properties and improved lifespan characteristics.

In present disclosure, "not include a or any 'component'", "exclude a or any 'component'", "'component'-free", and/or the like refers to that the "component" not being added, selected or utilized as a component in the composition or compound, but the "component" of less than a suitable amount may still be included due to other impurities and/or external factors.

A battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the one or more suitable components of the device may be formed on one integrated circuit (IC) chip or on separate IC chips. Further, the one or more suitable components of the device may be implemented on a flexible printed circuit film, a tape carrier package (TCP), a printed circuit board (PCB), or formed on one substrate. Further, the one or more suitable components of the device may be a process or thread, running on one or more processors, in one or more computing devices, executing computer program instructions and interacting with other system components for performing the one or more suitable functionalities described herein. The computer program instructions are stored in a memory which may be implemented in a computing device utilizing a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

In the present disclosure, when particles are spherical, "diameter" indicates a particle diameter or an average particle diameter, and when the particles are non-spherical, the "diameter" indicates a major axis length or an average major axis length.

In present disclosure, "not include a or any 'component'" "exclude a or any 'component'", "'component'-free", and/or the like refers to that the "component" not being added, selected or utilized as a component in the composition/structure, but the "component" of less than a suitable amount may still be included due to other impurities and/or external factors.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

## Claims

1. A lithium metal battery (1) comprising:
an anode current collector (21);
a protective film (22) on the anode current collector (21);
a separator (30);
a gel polymer electrolyte (31); and
a cathode (10),
wherein the protective film (22) comprises boron nitride (BN) and a binder, and
the gel polymer electrolyte (31) contains a gel polymer, BN, a nitrile-based compound, and a liquid electrolyte.

2. The lithium metal battery (1) as claimed in claim 1, wherein the nitrile-based compound is a compound having a melting point of 30 °C or more,
the nitrile-based compound comprises at least one selected from among succinonitrile, adiponitrile, pimelonitrile, suberonitrile, sebaconitrile, butyronitrile, acetonitrile, and propionitrile, and
a content of the nitrile-based compound is in a range of 0.01 parts by weight to 5 parts by weight with respect to 100 parts by weight of a total weight of the gel polymer electrolyte (31).

3. The lithium metal battery (1) as claimed in claim 1 or 2, wherein a size of the BN is in a range of 0.01 µm to 10 µm, and
a content of the BN of the gel polymer electrolyte (31) is controlled to be less than or equal to a content of the BN of the protective film (22).

4. The lithium metal battery (1) as claimed in any of claims 1 to 3, wherein, in the protective film (22), a content of the BN is in a range of 5 parts by weight or less with respect to 100 parts by weight of a total weight of the protective film (22), and
a content of the binder is in a range of 40 parts by weight to 60 parts by weight with respect to 100 parts by weight of the total weight of the protective film (22).

5. The lithium metal battery (1) as claimed in any of claims 1 to 4, wherein the protective film (22) further comprises a lithium salt, and
a mixing weight ratio of the binder to the lithium salt is in a range of 1:9 to 9:1.

6. The lithium metal battery (1) as claimed in any of claims 1 to 5, wherein the gel polymer is a crosslinked product of a polyfunctional acrylic monomer having three or more polymerizable functional groups, or a crosslinked product of a polyfunctional acrylic monomer having three or more polymerizable functional groups as a first polymerizable monomer, and at least one second polymerizable monomer selected from among a urethane acrylic monomer having two or more polymerizable functional groups, and a polymerizable monomer containing a perfluoropolyether (PFPE) unit and having two or more polymerizable functional groups, preferably wherein the polyfunctional acrylic monomer having the three or more polymerizable functional groups is pentaerythritol tetraacrylate, pentaerythritol tetramethacrylate, trimethylolpropane triacrylate, trimethylolpropane trimethacrylate (TMPTMA), ropoxylated(3)trimethylolpropane triacrylate (PO(3)TMPTA), propoxylated(6)trimethylolpropane triacrylate (PO(6)TMPTA), ethoxylated trimethylolpropane triacrylate, di(trimethylolpropane)tetraacrylate), pentaerythritol triacrylate (PETA), propoxylated glyceryl triacrylate, tris(2-hydroxyethyl) isocyanurate triacrylate (THEICTA), dipentaerythritol pentaacrylat (DPEPA), or a combination thereof, and/or
wherein the urethane acrylic monomer having the two or more functional groups is a compound represented by Formula 1 , a compound represented by Formula 2 , or a combination thereof, and
the polymerizable monomer containing the PFPE unit and having the two or more polymerizable functional groups is a compound represented by Formula 3, a compound represented by Formula 3-1, or a combination thereof; 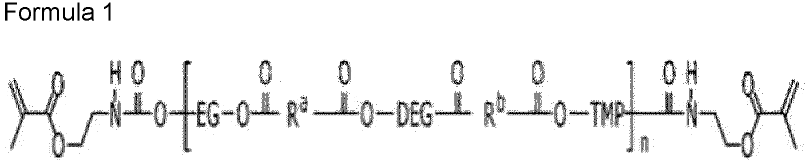 wherein in Formula 1, R^{a} and R^{b} are identical to or different from each other and are each a substituted or unsubstituted C1-C10 alkylene group, EG is an ethylene glycol residue, DEG is a diethylene glycol residue, TMP is a trimethylolpropane residue, and n is an integer from 1 to 100, and 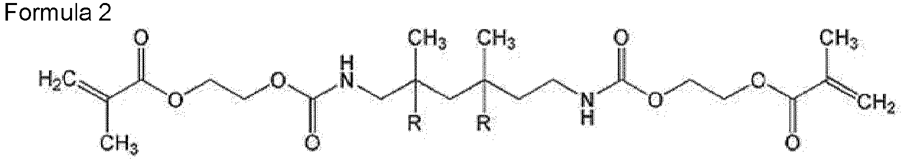 in Formula 2, R(s) are each independently a hydrogen atom or a C1-C3 alkyl group, 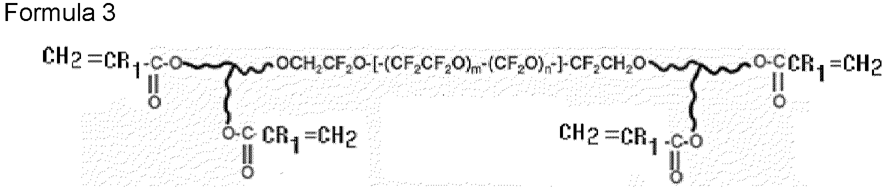 in Formula 3, R₁ is hydrogen or a C1-C6 alkyl group, m and n are each greater than 0, a sum of m and n is in a range of 2 to 300, m is a number in a range of 1 to 150, and n is a number in a range of 1 to 150, and 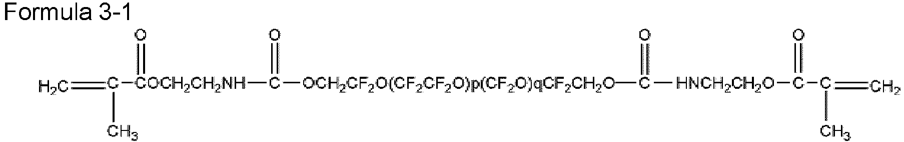 in Formula 3-1, p and q are each greater than 0, a sum of p and q is in a range of 2 to 300, p is a number from 1 to 150, and q is a number from 1 to 150.

7. The lithium metal battery (1) as claimed in any of claims 1 to 6, wherein a content of the BN in the gel polymer electrolyte (31) is 5 parts by weight or less with respect to 100 parts by weight of a total weight of the gel polymer electrolyte (31).

8. The lithium metal battery (1) as claimed in any of claims 1 to 7, wherein a thickness expansion ratio of an anode (20) represented by Equation 1 is 150 % or less: thickness expansion ratio (%) of anode = [thickness of plated lithium layer formed on anode current collector after charging of 100 cycles / thickness of plated lithium layer formed on anode current collector after formation] × 100

9. The lithium metal battery (1) as claimed in any of claims 1 to 8, wherein the protective film (22) further comprises a first polymer containing a hydroxyl group and a second polymer having a crosslinkable functional group,
wherein the second polymer comprises at least one selected from among fluorinated polyamic acid and fluorinated polyimide, each having a carboxyl group, and/or
wherein the protective film (22) further comprises a first polymer containing a hydroxyl group and a second polymer having a crosslinkable functional group, wherein the first polymer containing the hydroxyl group is a polymerization reaction product of at least one monomer selected from among carboxymethylcellulose (CMC), polyvinyl alcohol (PVA), vinyl acetate, butyl(meth)acrylate, 2-hydroxyethyl(meth)acrylate, 2-hydroxypropyl(meth)acrylate, 4-hydroxybutyl(meth)acrylate, 6-hydroxyhexyl(meta)acrylate, 8-hydroxyoctyl(meth)acrylate, 2-hydroxyethylene glycol(meth)acrylate, 2-hydroxypropylene glycol(meth)acrylate, acrylic acid, methacrylic acid, 2-(meth)acryloyloxy acetic acid, 3-(meth)acryloyloxy propylic acid, 4-(meth)acryloyloxy butyric acid, itaconic acid, maleic acid, 2-isocyanatoethyl(meth)acrylate, 3-isocyanatopropyl(meth)acrylate, 4-isocyanatobutyl(meth)acrylate, (meth)acrylamide, ethylenedi(meth)acrylate, diethylene glycol(meth)acrylate, triethylene glycol di(meth)acrylate, trimethylene propane tri(meth)acrylate, trimethylene propane triacrylate, 1,3-butanediol(meth)acrylate, 1,6-hexanediol di(meth)acrylate, allyl acrylate, and N-vinyl caprolactam, or a hydrolyzate of the polymerization reaction product, and
the second polymer is polyamic acid represented by Formula 14 or Formula 15, a polyimide represented by Formula 16 or Formula 17, or a combination thereof: 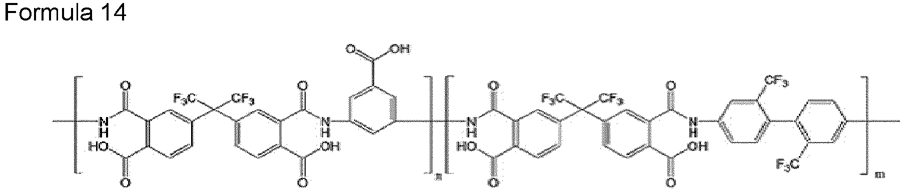 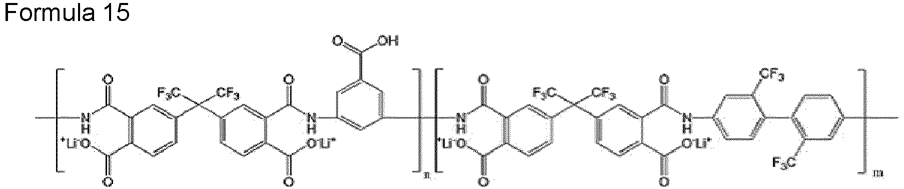 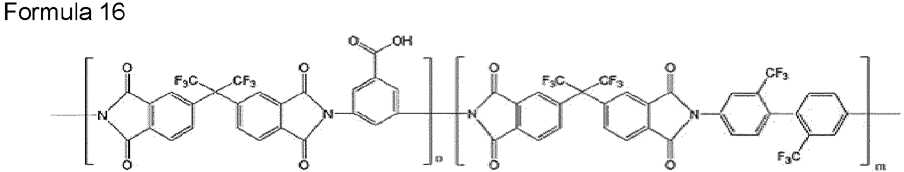 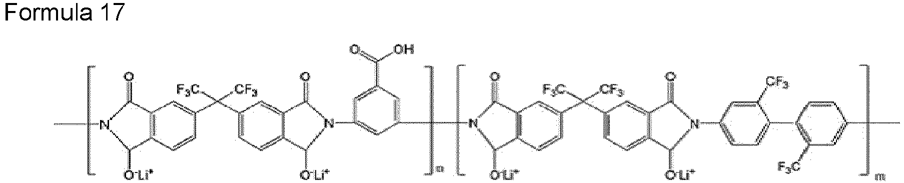 in Formulas 14 to 17, n and m are each a mole fraction in a repeating unit,
wherein 0<n≤1, 0≤m<1, and n+m=1.

10. The lithium metal battery (1) as claimed in any of claims 1 to 9, wherein the binder comprises a vinylidene fluoride-hexafluoropropylene (VDF-HFP) copolymer, polyethylene oxide, polypropylene oxide, polydimethylsiloxane, polyacrylonitrile, polymethylmetaacrylate, polyvinyl chloride, polyvinylidene fluoride, polyvinylidene fluoride-co-hexafluoropropylene, polyethyleneimine, polyphenylene terephthalamide, polymethoxypolyethylene glycol (meth)acrylate, poly[2-methoxy ethyl glycidyl ether], or a combination thereof.

11. The lithium metal battery (1) as claimed in any of claims 1 to 10, wherein the anode active material layer (23) contains: a carbon-based compound, a mixture of a carbon-based material and at least one selected from among first metals, a composite of a carbon-based material and at least one selected from among the firsts metal, or a combination thereof, preferably wherein the carbon-based material comprises amorphous carbon,
an average particle diameter of the amorphous carbon is in a range of 10 nm to about 100 nm,
the carbon-based material comprises carbon black, carbon nanotubes, carbon nanofibers, fullerene, activated carbon, carbon fibers, or a combination thereof, and
the first metals comprise indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, sodium, potassium, calcium, yttrium, tantalum, hafnium, barium, vanadium, strontium, lanthanum, or a combination thereof.

12. The lithium metal battery (1) as claimed in any of claims 1 to 11, further comprising a metal layer between the anode current collector (21) and the protective film (22),
wherein the metal layer comprises lithium metal foil, a lithium metal powder, lithium alloy foil, a lithium alloy powder, or a combination thereof,
the lithium alloy comprises lithium and a first metal, and
the first metal comprises indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, sodium, potassium, calcium, yttrium, tantalum, hafnium, barium, vanadium, strontium, lanthanum, or a combination thereof.

13. The lithium metal battery (1) as claimed in any of claims 1 to 12, further comprising an electrolyte,
wherein the electrolyte is a liquid electrolyte, a solid electrolyte, a gel electrolyte, or a combination thereof,
the solid electrolyte comprising an oxide-based solid electrolyte, a sulfide-based solid electrolyte, a polymer solid electrolyte, or a combination thereof, and
the gel electrolyte comprising a polymer gel electrolyte.

14. The lithium metal battery (1) as claimed in any of claims 1 to 13, wherein the cathode (10) comprises a cathode current collector (11) and a cathode active material layer (12),
at least one of the cathode current collector (11) or the anode current collector (21) comprises a base film and a metal layer on one side or both sides of the base film,
the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

15. A method of manufacturing the lithium metal battery (1) as claimed in any of claims 1 to 14, the method comprising:
preparing the anode current collector (21);
forming the protective film (22) comprising boron nitride and a binder on the anode current collector (21);
preparing the separator (30);
preparing the cathode (10);
stacking the anode current collector (21), the separator (30), and the cathode (10) to prepare a battery assembly;
injecting a gel polymer electrolyte-forming composition comprising a gel polymer-forming crosslinkable monomer, a liquid electrolyte, boron nitride, and a nitrile-based compound into the battery assembly; and
performing heat treatment to form the gel polymer electrolyte (31) and manufacture the lithium metal battery (1), preferably wherein the forming of the protective film (22) containing the boron nitride and the binder on the anode current collector (21) comprises coating the anode current collector (21) with a protective film (22)-forming composition comprising boron nitride and at least one selected from among a binder precursor and a binder and performing heat treatment,
wherein the protective film (22) further comprises a lithium salt.
